(19) Europäisches Patentamt
European Patent Office
Office européen des brevets

(11) EP 4 513 782 A1

(12) **EUROPEAN PATENT APPLICATION**
published in accordance with Art. 153(4) EPC

(43) Date of publication:
**26.02.2025 Bulletin 2025/09**

(21) Application number: **23792084.8**

(22) Date of filing: **10.04.2023**

(51) International Patent Classification (IPC):
***H04B 7/155*** *(2006.01)* ***H04W 72/04*** *(2023.01)*
***H04L 5/14*** *(2006.01)*

(52) Cooperative Patent Classification (CPC):
**H04B 7/155; H04L 5/14; H04W 72/04**

(86) International application number:
**PCT/KR2023/004820**

(87) International publication number:
**WO 2023/204506 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.04.2022 KR 20220048825**

(71) Applicant: **LG Electronics Inc.**
**Yeongdeungpo-gu**
**Seoul 07336 (KR)**

(72) Inventors:
- **BAN, Choongsang**
  **Seoul 06772 (KR)**
- **YOU, Hyangsun**
  **Seoul 06772 (KR)**
- **KO, Hyunsoo**
  **Seoul 06772 (KR)**
- **SHIM, Jaenam**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) METHOD AND APPARATUS FOR ASSIGNING RESOURCES IN WIRELESS COMMUNICATION SYSTEM

(57) Various embodiments of the present disclosure provide a method performed by an electronic device including a first device and a second device in a wireless communication system. The method may comprise receiving, by the first device, from a base station, semi-static time division duplex (TDD) uplink-downlink (UL-DL) configuration common information and semi-static TDD UL-DL configuration dedicated information, determine, by the first device, semi-static TDD resource allocation information to be applied to the second device by overriding the semi-static TDD UL-DL configuration dedicated information for the semi-static TDD UL-DL configuration common information, and forwarding, by the second device, based on the semi-static TDD resource allocation information, a signal from the base station to a user equipment (UE) or a signal from the UE to the base station.

【FIG. 15】

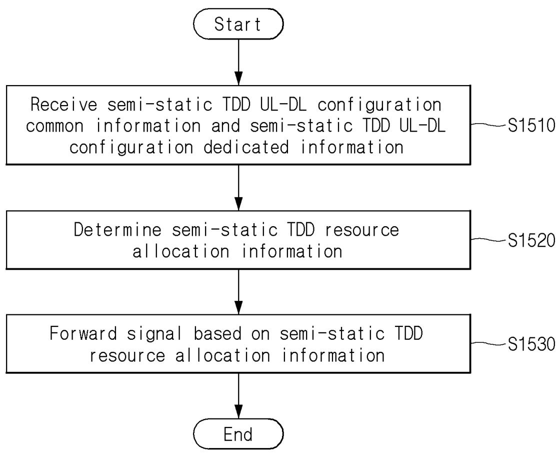


EP 4 513 782 A1

## Description

[Technical Field]

The present disclosure relates to a wireless communication system. More specifically, the present disclosure relates to a method and device for allocating resources in a wireless communication system.

[Background Art]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, as many communication devices require large communication capacity, more enhanced mobile broadband (eMBB) communication technology than the existing radio access technology (RAT) is proposed. Not only massive machine type communications (mMTC) which provide various services anytime and anywhere by connecting a large number of devices and objects, but also a communication system considering service/user equipment (UE) sensitive to reliability and latency are proposed. Various technical configurations for this are proposed.

[Disclosure]

[Technical Problem]

In order to solve the above-described problems, the present disclosure provides a method and device for allocating resources in a wireless communication system.

In order to solve the above-described problems, the present disclosure provides a method of determining/configuring time division duplexing (TDD) resource allocation information of a network-controlled repeater (NCR) and a method of indicating resource allocation information during an operation of the NCR in an NR environment.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

In a method of operating an electronic device in a wireless communication system according to an embodiment of the present disclosure, the electronic device includes a first device and a second device, and the method may comprise receiving, by the first device, from a base station, semi-static time division duplex (TDD) uplink-downlink (UL-DL) configuration common information and semi-static TDD UL-DL configuration dedicated information, determining, by the first device, semi-static TDD resource allocation information to be applied to the second device by overriding the semi-static TDD UL-DL configuration dedicated information for the semi-static TDD UL-DL configuration common information, and forwarding, by the second device, based on the semi-static TDD resource allocation information, a signal from the base station to a user equipment (UE) or a signal from the UE to the base station.

The semi-static TDD resource allocation information may include information of a flexible resource that is not allocated in an UL or a DL. The flexible resource may be a propagation delay between the UL and the DL, and a transmission and a reception by the second device may not be performed in the flexible resource.

The semi-static TDD resource allocation information may include information of a flexible resource that is not allocated in a DL or an UL. Based on a beam failure occurring, the flexible resource may be used to perform a beam failure recovery (BFR) procedure.

The method may further comprise receiving, by the first device, dynamic TDD UL-DL information from the base station. The beam failure recovery procedure may be performed based on the dynamic TDD UL-DL information.

The semi-static TDD UL-DL configuration common information may be commonly applied to the first device and the second device.

The semi-static TDD UL-DL configuration dedicated information may be dedicatedly applied to the second device.

The method may further comprise receiving, by the first device, dynamic TDD UL-DL information from the base station. The semi-static TDD resource allocation information may include allocation information of a flexible resource that is not allocated in an UL or a DL. The first device may override the dynamic TDD UL-DL information to thereby determine the allocation information of the flexible resource within the semi-static TDD resource allocation information to be applied to the second device as allocation information of an UL resource or a DL resource.

The method may further comprise receiving, by the first device, dynamic TDD UL-DL information from the base station. Allocation information of an UL resource or a DL resource within the semi-static TDD resource allocation information to be applied to the second device may have a priority over the dynamic TDD UL-DL information. A transmission and a reception by the second device may be performed in the UL resource or the DL resource based on the semi-static TDD resource allocation information.

A method of operating a base station in a wireless communication system according to an embodiment of the present disclosure may comprise transmitting semi-static time division duplex (TDD) uplink-downlink (UL-DL) configuration common information and semi-static TDD UL-DL configuration dedicated information to a first device of an electronic device including the first device and a second device, transmitting semi-static TDD resource allocation information of the second device to the first device, the semi-static TDD resource allocation information of the second device being information in which the semi-static TDD UL-DL configuration dedicated information is overridden for the semi-static TDD UL-DL configuration common information, and, based on the semi-static TDD resource allocation information, receiving a signal from a user equipment (UE) from the second device or transmitting a signal to be forwarded to the UE to the second device.

The semi-static TDD UL-DL configuration common information may be commonly applied to the first device and the second device, and the semi-static TDD UL-DL configuration dedicated information may be dedicatedly applied to the second device.

The semi-static TDD resource allocation information may include information of a flexible resource that is not allocated in an UL or a DL.

The method may further comprise transmitting dynamic TDD UL-DL information to the first device. Allocation information of the flexible resource within the semi-static TDD resource allocation information to be applied to the second device may be determined as allocation information of an UL resource or a DL resource by overriding the dynamic TDD UL-DL information.

The method may further comprise transmitting dynamic TDD UL-DL information to the first device. Allocation information of an UL resource or a DL resource within the semi-static TDD resource allocation information to be applied to the second device has a priority over the dynamic TDD UL-DL information. A transmission and a reception by the second device may be performed in the UL resource or the DL resource based on the semi-static TDD resource allocation information.

An electronic device in a communication system according to an embodiment of the present disclosure may comprise a first device including a first transceiver, a second device including a second transceiver, at least one processor, and at least one memory operably connectable to the at least one processor and configured to store instructions performing operations based on being executed by the at least one processor, and the operations may comprise all steps of a method according to any one of claims 1 to 7.

A base station in a communication system according to an embodiment of the present disclosure may comprise a transceiver, at least one processor, and at least one memory operably connectable to the at least one processor and configured to store instructions performing operations based on being executed by the at least one processor, and the operations may comprise all steps of a method according to any one of claims 8 to 12.

A control device controlling an electronic device in a communication system according to an embodiment of the present disclosure may comprise at least one processor, and at least one memory operably connected to the at least one processor and configured to store instructions performing operations based on being executed by the at least one processor, and the operations may comprise all steps of a method according to any one of claims 1 to 7.

A control device controlling a base station in a communication system according to an embodiment of the present disclosure may comprise at least one processor, and at least one memory operably connected to the at least one processor and configured to store instructions performing operations based on being executed by the at least one processor, and the operations may comprise all steps of a method according to any one of claims 8 to 12.

In one or more non-transitory computer readable mediums storing one or more instructions according to an embodiment of the present disclosure, the one or more instructions may perform operations based on being executed by one or more processors, and the operations may comprise all steps of a method according to any one of claims 1 to 7.

In one or more non-transitory computer readable mediums storing one or more instructions according to an embodiment of the present disclosure, the one or more instructions may perform operations based on being executed by one or more processors, and the operations may comprise all steps of a method according to any one of claims 8 to 12.

[Advantageous Effects]

The present disclosure provides a method and device for allocating resources in a wireless communication system in order to solve the above-described problems.

The present disclosure can determine semi-static TDD DL/UL information of an RU without additional signaling by equally using TDD resource allocation information configured to an MT for TDD resource allocation of the RU.

The present disclosure can increase transmission efficiency and reduce interference compared to an existing repeater by allocating dynamic TDD DL/UL resources for an NCR

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates an example of physical channels and general signal transmission used in the 3GPP system.
FIG. 2 illustrates an example of a structure of a radio frame used in NR.
FIG. 3 illustrates an example of a slot structure of an NR frame.
FIG. 4 illustrates an example of a self-contained slot.
FIGS. 5 to 8 illustrate an example of transmission network architecture for 5G.
FIG. 9 illustrates an example of a topology in which an NCR performs transmission and reception between a base station and a UE.
FIG. 10 illustrates an example of a beamforming operation of an existing RF repeater.
FIG. 11 illustrates an example of a beamforming operation of an NCR.
FIG. 12 illustrates an example of an NCR model.
FIG. 13 illustrates an example of a transmit beam direction operated by a gNB and a transmit beam direction operated by an RU in an NCR topology of a single hop between gNB-NCR-UE.
FIG. 14 illustrates an example of a resource allocation method according to another embodiment of the present disclosure.
FIG. 15 is a flowchart illustrating a signal transmission/reception method according to an embodiment of the present disclosure.
FIG. 16 is a flowchart illustrating a signal transmission/reception method according to another embodiment of the present disclosure.
FIG. 17 illustrates a communication system applied to various embodiments of the present disclosure.
FIG. 18 illustrates wireless devices applicable to various embodiments of the present disclosure.
FIG. 19 illustrates another example of wireless devices applicable to various embodiments of the present disclosure.
FIG. 20 illustrates a signal processing circuit for a transmission signal.
FIG. 21 illustrates an example of a wireless communication device applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

The following technologies can be applied to various wireless access systems such as code division multiple access (CDMA), frequency division multiple access (FDMA), time division multiple access (TDMA), orthogonal frequency division multiple access (OFDMA), or single carrier-frequency division multiple access (SC-FDMA). The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE or NR etc), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The 3GPP 6G may mean technology after TS Release 17 and/or Release 18. "xxx" denotes a detailed standard document number. The LTE/NR/6G may be collectively referred to as the 3GPP system. For background art, terms, abbreviations, etc. used in the present disclosure, reference can be made to items described in standard documents published prior to the present disclosure. For example, the following document may be referred to.

3GPP LTE

- 36.101: User Equipment (UE) radio transmission and reception
- 36.211: Physical channels and modulation
- 36.212: Multiplexing and channel coding
- 36.213: Physical layer procedures
- 36.214: Physical layer Measurements
- 36.321: Medium Access Control (MAC) protocol specification
- 36.331: Radio Resource Control (RRC)
- 37.213: Physical layer procedures for shared spectrum channel access

3GPP NR

- 38.101-1: Part 1: Range 1 Standalone
- 38.101-2: Part 2: Range 2 Standalone
- 38.101-2: Part 3: Range 1 and Range 2 Interworking operation with other radios
- 38.211: Physical channels and modulation
- 38.212: Multiplexing and channel coding
- 38.213: Physical layer procedures
- 38.214: Physical layer Measurements
- 38.215: Physical layer measurements
- 38.321: Medium Access Control (MAC) protocol specification
- 38.331: Radio Resource Control (RRC)

For the purpose of explaining the present disclosure, terms not defined above are as follows.

IAB-node: RAN node that supports wireless access to UEs and wirelessly backhauls the access traffic.

IAB-donor: RAN node that provides UE's interface to core network and wireless backhauling functionality to IAB nodes.

Abbreviations used in the present disclosure may be defined as follows.

IAB: Integrated Access and Backhaul
CSI-RS: Channel State Information Reference Signal

DgNB: Donor gNB
AC: Access
BH: Backhaul
FH: Fronthaul
CU: Centralized Unit
DU: Distributed Unit
RU: Remote Unit
MT: Mobile terminal
CU: Centralized Unit
IAB-MT: IAB mobile terminal
NGC: Next-Generation Core network
SA: Stand-alone
NSA: non-stand-alone
EPC: Evolved Packet Core

## Physical Channel and Frame Structure

### Physical Channel and General Signal Transmission

FIG. 1 illustrates an example of physical channels and general signal transmission used in the 3GPP system.

In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S11). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S12).

When there is no radio resource first accessing the eNB or for signal transmission, the UE may perform a Random Access Procedure (RACH) to the eNB (S13 to S16). To this end, the UE may transmit a specific sequence to a preamble through a Physical Random Access Channel (PRACH) (S13 and S15) and receive a response message (Random Access Response (RAR) message) for the preamble through the PDCCH and a corresponding PDSCH. In the case of a contention based RACH, a Contention Resolution Procedure may be additionally performed (S16).

The UE that performs the above procedure may then perform PDCCH/PDSCH reception (S17) and Physical Uplink Shared Channel (PUSCH)/Physical Uplink Control Channel (PUCCH) transmission (S18) as a general uplink/-downlink signal transmission procedure. Control information that the UE transmits to the base station may be referred to as uplink control information (UCI). The UCI may include hybrid automatic repeat and request (HARQ) acknowledgement/negative ACK (ACK/NACK), scheduling request (SR), channel state information (CSI), etc. The CSI may include a channel quality indication (CQI), a precoding matrix indicator (PMI), a rank indicator (RI), etc. The UCI may be generally transmitted on the PUCCH, but if control information and data need to be transmitted at the same time, the UCI may be transmitted on the PUSCH. The UE may aperiodically transmit the UCI to the base station on the PUSCH based on a request/indication of the network.

New radio access technology (new RAT, NR) is described below.

As more and more communication devices require larger communication capacity, there is a need for enhanced mobile broadband communication compared to the existing radio access technology (RAT). Massive machine type communications (MTC) which provide various services anytime and anywhere by connecting many devices and objects are also one of the major issues to be considered in next-generation communications. In addition, a communication system design considering a service/UE sensitive to reliability and latency is also being discussed. As above, the introduction of next generation RAT considering enhanced mobile broadband communication, massive MTC, ultra-reliable and low latency communication (URLLC), etc. is discussed, and the technology is called new RAT or NR for convenience in various embodiments of the present disclosure.

Orthogonal Frequency Division Multiplexing (OFDM) Numerology

FIG. 2 illustrates an example of a structure of a radio frame used in NR.

A new radio access technology (RAT) system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

Referring to FIG. 2, in NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

In Table 1, $N^{slot}_{symb}$ is the number of symbols in the slot, $N^{frame,u}_{slot}$ is the number of slots in the frame, and $N^{subframe,u}_{slot}$ is the number of slots in the subframe.

Table 2 shows that when the extended CP is used, the number of symbols per slot, the number of slots per frame, and the number of slots per subframe vary depending on the SCS.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

NR supports multiple numerologies (or subcarrier spacing (SCS)) for supporting diverse 5th generation (5G) services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz in order to overcome phase noise.

An NR frequency band may be defined as two types of frequency ranges FR1 and FR2. Values of frequency ranges may be changed. For example, the two types of frequency ranges FR1 and FR2 may be defined as in Table 3 below.

[Table 3]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

For convenience of explanation, FR1 among the frequency ranges used in the NR system may mean "sub 6 GHz range", and FR2 may mean "above 6 GHz range" and may call millimeter wave (mmW). As described above, values of the frequency range of the NR system may be changed. For example, FR1 may include a range of 410 MHz to 7125 MHz as shown in FIG. 4 below.

[Table 4]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Referring to FIG. 4, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 may include an unlicensed band. The unlicensed band may be used for diverse purposes, for example, used for communication for vehicles (e.g., self-driving). In the NR system, OFDM(A) numerology (e.g., SCS, CP length, etc.) may be differently configured between a plurality of cells merged into one UE. Hence, an (absolute time) duration of a time resource (e.g., subframe (SF), slot or transmission time interval (TTI)) (for convenience, collectively referred to as a time unit (TU)) consisting of the same number of symbols may be configured differently between the merged cells.

FIG. 3 illustrates an example of a slot structure of an NR frame.

Referring to FIG. 3, a slot includes a plurality of symbols in a time domain. For example, one slot includes seven symbols in a normal CP, while one slot includes six symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., five) BWPs. The data communication may be performed through an activated BWP, and only one BWP may be activated in one UE. In a resource grid, each element is referred to as a resource element (RE), and one complex symbol may be mapped to each RE.

FIG. 4 illustrates an example of a self-contained slot.

In the NR system, a frame is characterized by a self-contained structure in which all of a DL control channel, DL or UL data, and an UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as an UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.

1. DL only configuration
2. UL only configuration
3. Mixed UL-DL configuration

- DL region + Guard Period (GP) + UL control region
- DL control region + GP + UL region

    * DL region: (i) DL data region, (ii) DL control region + DL data region
    * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

FIGS. 5 to 8 illustrate an example of transmission network architecture for 5G.

Referring to FIG. 5, ITU-T (Telecommunication Standardization Sector) has adopted slightly different 5G transmission network architecture consisting of three logical elements of a control unit (CU), a distributed unit (DU) and a radio unit (RU). In this model, functions of a mid-layer and a lower layer are split as the DU and the RU. Based on the functional split between the DU and the RU, the RU implements a radio frequency (RF) functionality, and if possible, also implements a low-PHY functionality and a high-PHY functionality.

Referring to FIGS. 6 to 8, CUs, DUs, and RUs may be grouped in different combinations to form actual physical network elements based on network requirements. This may provide flexibility to accommodate various network architectures, applications, and transmission network requirements.

As illustrated in FIGS. 5 to 8, a transmission network between the 5th generation core network (5GC) and the CU is referred to as backhaul, and a backhaul network implements a 3GPP next generation (NG) interface. In the same manner, a transmission network between the CU and the DU is referred to as midhaul, and a midhaul network implements a 3GPP F1 interface. Finally, a transmission network between the DU and the RU is referred to as fronthaul. The backhaul, the midhaul, and the fronthaul are generally referred to as xhaul.

Reconfigurable Intelligent Surface (RIS)

An RIS may be used to control the propagation of electromagnetic waves by changing electrical and magnetic properties of the electromagnetic waves on the surface. The RIS is also known as an intelligent reflecting surface (IRS) and a large intelligent surface (LIS) and may have a programmable structure. The RIS may be used to sense a wireless environment by integrating sensing functions, in addition to controlling the propagation of the electromagnetic waves. The properties of wireless channels can be controlled at least partially by deploying the RIS in an environment in which a wireless system operates.

The functionality of the RIS can provide many advantages, including the possibility of improving stability and coverage performance through beamforming or range extension. The ability to control a propagation environment has somewhat changed the existing wireless system design paradigm in which wireless channels were always considered as uncontrollable entities that distorted the transmitted signal. Thus, a transmitter (TX) and a receiver (RX) have been traditionally designed to equalize an effect of the channel. There are various expected scenarios, for example, a single RIS being deployed on a wall to indicate a signal coming from a predetermined direction.

The use of the RIS can provide a 'transmission effect' of a gNB signal that allows external signal to be transmitted into the building, and a coverage for a shaded area can be improved by providing a 'reflection effect' of an NLoS environment.

**Network-Controlled Repeater (NCR) of NR**

Existing RF Repeater

An RF repeater is a non-regenerative relay node that simply amplifies and forwards everything it receives. The main advantages of the RF repeaters are their low cost, ease of deployment, and not increasing latency. The main disadvantage of the RF repeaters is that they can amplify signals and noise to contribute to an increase in interference (contamination) of the system.

Release (Rel)-17 Work Item (WI) of RF Repeater (RAN4)

The RF repeater is specified in Rel-17 of RAN4 for a frequency range 1 (FR1) frequency division duplex (FDD)/time division duplex (TDD) and a frequency range 2 (FR2) band. The Rel-17 WID contains only RF requirements. The RAN4 work item description (WID) (RP-210818) specifies that it is assumed that the RF repeater does not perform adaptive beamforming toward a UE.

NCR for Rel-18 NR

Coverage is a basic aspect of cellular network deployment. When deployed, mobile operators rely on various types of network nodes to provide blanket coverage. The deployment of regular full-stack cells is one option but is not always possible (e.g., without backhaul availability) or is not always economically viable.

As a result, a new type of network node has been considered to increase the network deployment flexibility of the mobile operator. For example, integrated access and backhaul (IAB) has been introduced in Rel-16 and enhanced in Rel-17 to a new type of network node that does not require wired backhaul. Another type of network node is an RF repeater that simply amplifies and forwards all signals it receives. The RF repeaters have been widely deployed to complement the coverage provided by regular full-stack cells in 2G, 3G and 4G. In Rel-17, RAN4 has specified RF and electromagnetic compatibility (EMC) requirements for RF repeaters for NR targeting both FR1 and FR2.

The RF repeaters provide a cost-effective means of extending network coverage. However, the RF repeaters have limitations in simply performing amplification and forwarding operations without considering various factors that can improve performance. These factors may include information on semi-static and/or dynamic downlink/uplink configurations, adaptive transmitter/receiver spatial beamforming, ON-OFF states, and the like.

Compared to the existing RF repeater, the NCR improves a function of receiving and processing side control information. The side control information enables a network control repeater to perform amplification and forwarding operations in a more efficient manner. Potential advantages may include mitigation of unnecessary noise amplification, better spatial directivity transmission and reception, and simplified network integration.

The study of NCR for NR focuses on the following scenarios and assumptions. The NCR is an in-band RF repeater used to extend a network range in the FR1 and FR2 bands, and the FR2 deployment during the study may be prioritized for both outdoor and outdoor to indoor (O2I) scenarios. It corresponds only to a single hop stationary NCR. The NCR is transparent to the UE. The NCR may simultaneously maintain a gNodeB (gNB)-repeater link and a repeater-UE link. Here, cost efficiency is a key consideration for the NCR.

In RAN1, there is a study and identification of whether the following side control information, including a maximum transmission power assumption, is needed for the NCR. That is, there is a study and identification of whether side control information such as beamforming information, timing information for aligning transmission/reception boundaries of the NCR, uplink-downlink TDD configuration information, On-Off information for efficient interference management and energy efficiency enhancement, and power control information (as a second priority) for efficient interference management is needed for the NCR. In addition, the RAN1 has a study and identification of L1/L2 (layer 1/layer 2) signal (including configuration of L1/L2) for transmitting the side control information.

RAN2 and RAN3 have a study on identification and authentication of the NCR. Here, coordination with SA3 may be necessary. The network-controlled repeater (NCR) may consist of an RU and a MT.

FIG. 9 illustrates an example of a topology in which an NCR performs transmission and reception between gNB and a UE.

In FIG. 9, the gNB may include a CU and/or a DU, and the NCR may be connected to the gNB. The NCR may consist of a mobile terminal (MT) and an RU.

The RU may consist of only an RF layer. The RU may receive a signal sent by the gNB at an RF end and transmit the signal to the UE, and the RU may receive a signal sent by the UE at the RF end and transmit the signal to the gNB. The RU only transmits the signal between the gNB and the UE, but cannot itself generate signal/channel and transmit it to the gNB/UE or receive signal/channel from the gNB/UE and search for it. The RU may consider adjusting the transmit/receive beam direction, downlink/uplink direction, whether it is On/Off, transmit power, etc., at the RF end, in order to transmit the received signal. However, such an operation of the RU cannot be determined by the NCR itself, and may be entirely controlled by the gNB.

The MT may include an RF layer and L1, L2 and/or L3 layers. For example, the MT may include the RF layer and the L1 layer or the L1/L2 layer, or the MT may include the RF layer and the L1/L1/L3 layer. The MT may search/receive the signal/channel transmitted by the gNB, and the MT may generate and transmit the signal/channel transmitted to the gNB. The MT may receive information (i.e., side control information) required to control an operation of the RU from the gNB. The MT does not perform transmission/reception with the UE.

When compared to the existing RF repeater, the NCR can operate as follows.

FIG. 10 illustrates an example of a beamforming operation of an existing RF repeater. FIG. 11 illustrates an example of a beamforming operation of an NCR.

Referring to FIGS. 10 and 11, the existing RF repeater performs beamforming applying an omni-direction or a fixed direction, as illustrated in FIG. 10. On the other hand, the NCR can obtain a beamforming gain by adaptively adjusting a transmit/receive beam direction of the NCR based on a location of the UE and channel conditions of the UE, as illustrated in FIG. 11.

The existing RF repeater cannot distinguish downlink and uplink directions in a TDD system and always performed simultaneously transmission and reception in the downlink direction and the uplink direction. Alternatively, the existing RF repeater applies only a fixed TDD configuration to perform switching between the downlink direction and the uplink direction in a given time pattern. On the other hand, the NCR may perform downlink/uplink switching in consideration of the TDD configuration. Hence, this enables adaptive downlink/uplink operation and can reduce power waste and interference caused by transmitting unnecessary signals.

The existing RF repeater always amplifies and forwards the power of a received signal regardless of whether the gNB and the UE transmit signals. Hence, this unnecessarily wastes the power and increases the interference to the surroundings. The NCR may perform the On/Off operation to turn off the operation of the RU when there is no signal to transmit to the gNB/UE, thereby not transmitting unnecessary signals.

The existing RF repeater amplified and forwarded the power of the received signal at a fixed ratio. On the other hand, an influence of interference on the surroundings can be reduced by reducing the transmission power of the NCR when the signal is transmitted with unnecessarily large power, thereby reducing, and the signal can be stably transmitted to the receiver by increasing the transmission power of NCR when the signal is transmitted with low power.

The existing RF repeater operates without knowing downlink/uplink slot boundaries. On the other hand, the NCR shall know transmission/reception boundaries of the downlink and uplink in order to adaptively adjust the beamforming, the on/off, the downlink/uplink direction, the transmission power, etc. as described above. Through this, the NCR can differently apply the operation of the RU per unit time (e.g., slot or symbol).

Based on this discussion, the present disclosure proposes a method for an NCR to determine/configure TDD resource allocation information and a method for an NCR to receive an indication from a base station.

The present disclosure assumes an operation in the NCR. However, the present disclosure can also be applied to equipment/device not the NCR. In particular, the contents of the present disclosure can be applied for the operation of the RIS. To this end, the NCR mentioned in the present disclosure can be replaced by the RIS and extended/interpreted. In this case, the RU may perform a role of transmitting a signal from the gNB to the UE and a role of transmitting the signal from the UE to the gNB in the RIS, and the MT may perform a role of receiving side control information for controlling signal transmission of the RU from the gNB. In the present disclosure, the network may be interpreted as being replaced by the gNB or the CU/DU. The gNB may also be interpreted as being replaced by the network or the CU/DU.

The NCR aims to control the more intelligent operation of the RU beyond the limitations of the simple signal amplification and forwarding of an existing radio frequency (RF) repeater. To this end, the concept of side control information has been newly introduced in the NCR. The operation control of the RU can be partially performed by transmitting and receiving the side control information between the gNB and the MT.

However, as the cost-effectiveness of the NCR is emerging as an important factor, it may be difficult for the MT to have a full control capability in the form of a full protocol stack. However, the NCR enables the efficient control of the RU by utilizing the side control information, and thus it has the advantage of being differentiated from the existing RF repeater that is implemented only.

In this way, it can be expected that techniques will be applied that can obtain a benefit of performance with a small investment of cost through the development of intelligent operation technology for the NCR.

The NCR may consider controlling the transmit/receive beam direction, the DL/UL direction, whether it is on/off, the transmission power, etc. at the RF end so as to forward the signal received by the RU. However, the operation of the RU cannot be determined by the NCR itself and can be entirely controlled by the gNB. To this end, the MT may receive information (i.e., side control information) required to control the operation of the RU from the gNB.

For example, the side control information may include all or some of the following information.

1) Beamforming information

→ Information on transmit/receive beam directions of RU
→ This information may include beam directions for uplink transmission to the gNB, downlink reception from the gNB, downlink transmission to the UE, and/or uplink reception from the UE.

2) Timing information to align transmission/reception boundaries of network-controlled repeater (NCR)

→ Information for RU to align transmission/reception slots or boundaries

3) Information on uplink-downlink TDD configuration

→ Information on downlink/uplink directions of RU

4) ON-OFF information for efficient interference management and improved energy efficiency

→ Information on ON-OFF operation of RU

5) Power control information for efficient interference management)

→ Information on transmission power of RU
→ This information may include uplink transmission power to gNB and/or downlink transmission power to UE.

The gNB may provide TDD resource allocation information of the RU to the NCR via side control information, thereby controlling a TDD transmission method of the RU. In this instance, a new definition is needed for a method of determining and configuring the TDD resource allocation information of the RU and a method of indicating the TDD resource allocation information of the RU.

An RU of the existing RF repeater used DL/UL information as it is that has already been determined by a fixed static configuration based on an implementation without separately determining DL/DL information upon the TDD transmission.

On the other hand, the NCR is characterized by being able to define a limited but configurable operation using a newly introduced MT. That is, the TDD transmission operation of the RU may be newly designed via the side control information. In other words, there is no determined method yet for how the NCR should use the TDD resource allocation information (D/F/U) (DL/UL and/or flexible).

The present disclosure proposes a method of determining or configuring TDD resource allocation information of an RU and a method of indicating TDD resource allocation information to an RU. In the present disclosure, DL/UL information refers to information on D/F/U which is resource allocation information that can be newly configured by the NCR. In addition, a flexible resource may be expressed as an F-resource.

Additional advantages, objects, and features of the present disclosure will be set forth in part in the following description and in part will become apparent to those skilled in the art upon examination of the following or can be learned from embodiments of the present disclosure. Objects and other advantages of the present disclosure may be realized and attained by the structures particularly pointed out in the disclosed description and the claims, as well as in the accompanying drawings.

## <Contents related to the present disclosure>

The configurations, operations, and other features of the present disclosure will be understood by embodiments of the present disclosure described with reference to the accompanying drawings.

Similar to the existing RF repeater, an RU does not have its own decision capability, but can be controlled more efficiently through newly introduced side control information in the NCR. Therefore, there is a need for a new definition of how to configure TDD resource allocation information of the RU and how to determine D/F/U resources in the configured TDD resource allocation information.

In addition, it is necessary to determine what criteria the TDD resource allocation information of the RU thus determined/configured should be indicated. Hereinafter, a detailed procedure is proposed for a method of determining/-configuring TDD resource allocation information that can be newly applied in the RU of the NCR and an indication method of the information.

In the present disclosure, the gNB may configure semi-static TDD resource allocation information of the NCR based on the procedure described in Table 5 below.

[Table 5]

| |
|---|
| 11.1 Slot configuration<br>A slot format includes downlink symbols, uplink symbols, and flexible symbols. The following are applicable for each serving cell.<br>If a UE is provided *tdd-UL-DL-ConfigurationCommon,* the UE sets the slot format per slot over a number of slots as indicated by *tdd-UL-DL-ConfigurationCommon.*<br>The *tdd-UL-DL-ConfigurationCommon* provides<br>- a reference SCS configuration $\mu_{ref}$ by *referenceSubcarrierSpacing*<br>- *a patternl.*<br>The *patternl* provides<br>- a slot configuration period of *P* msec by *dl-UL-TransmissionPeriodicity*<br>- a number of slots $d_{slots}$ with only downlink symbols by *nrofDownlinkSlots*<br>- a number of downlink symbols $d_{sym}$ by *nrofDownlinkSymbols*<br>- a number of slots $u_{slots}$ with only uplink symbols by *nrofUplinkSlots*<br>- a number of uplink symbols $u_{sym}$ by *nrofUplinkSymbols* |

It is assumed that there is RRC/MAC-CE signaling between the gNB and the NCR. For example, when RRC re-configuration between the NCR and the gNB is performed and tdd-UL-DL-configurationCommon is configured based on mu_ref value including reference SCS information, periodicity P (msec), and pattern information ($d_{sym}$, $d_{slots}$/$u_{sym}$, $u_{slots}$) including slot/symbol information of DL/UL, DL resources may be allocated/configured from the beginning to $d_{sym}+d_{slots}$ and UL resources may be allocated/configured from the last to $u_{sym+}u_{slots}$ in a duration corresponding to P*2mu_ref slot. $P*2^{mu_ref}- (d_{sym}+d_{slots})-(u_{sym}+u_{slots}) \geq 0$ remaining in the duration may be configured/allocated as a flexible resource (F-resource).

## Method of configuring TDD DL/UL information of RU

The existing RF repeater statically implemented TDD transmission of the RU, and thus performed transmission and reception through fixed DL/UL information. Unlike this, the RU of the NCR may expect configurable DL/UL information utilization by using an MT into which side control information is introduced.

In general, the gNB may transmit semi-static TDD DL/UL configuration information to the NCR via radio resource control (RRC)/MAC-control element (CE) signaling. The gNB may transmit the semi-static TDD DL/UL configuration information to the NCR via side control information. Since the RU of the NCR has no control/decision capability, the MT of the NCR may receive the semi-static TDD DL/UL configuration information from the gNB. That is, the MT may receive the semi-static TDD DL/UL configuration information from the gNB via the side control information. The gNB may configure the semi-static TDD DL/UL configuration information to the MT in the same manner as a slot format procedure in Table 6 below.

On the other hand, as mentioned above, the RU cannot make its own decision in performing the operation. Thus, it may be possible to consider a method of performing more efficient TDD transmissions using the side control information introduced in the NCR.

From this perspective, two main methods may be considered: a method in which the MT configures semi-static TDD DL/UL information configured to the MT to the RU and the RU uses the semi-static TDD DL/UL information configured to the MT as it is, or a method in which the MT configures new semi-static TDD DL/UL information for the RU to the RU via side control information. A specific method is as follows.

Method 1: Semi-static TDD DL/UL information configured to an MT is equally applied to an RU.

In the same manner as a TDD slot format procedure of a general UE, a gNB may configure semi-static TDD DL/UL information to the MT. And the RU may use the semi-static TDD DL/UL information configured to the MT as it is. That is, when the semi-static TDD DL/UL information is configured to the MT, the MT may determine semi-static TDD resource allocation information for an RU operation based on the semi-static TDD DL/UL information configured to the MT.

As above, if the TDD resource allocation information configured from the gNB to the MT is equally used for TDD resource allocation of the RU, there is an advantage in that the semi-static TDD DL/UL information of the RU can be determined without additional signaling.

The MT may determine the semi-static TDD DL/UL information applied to the RU in consideration of the following two methods. 1) The MT may determine the semi-static TDD DL/UL information applied to the RU using TDD-UL-DL-configurationCommon information configured to the MT. Alternatively, 2) the MT may determine the semi-static TDD DL/UL information applied to the RU using the TDD-UL-DL-configurationCommon information and TDD-UL-DL-configurationDedicated information.

More specifically, if the MT performs RRC re-configuration between the NCR and the gNB and is in RRC_CONNECTED state configured with the TDD-UL-DL-configurationCommon information based on mu_ref including reference SCS information, periodicity P, and pattern information of slot/symbol information ($d_{sym}$, $d_{slots}$/$u_{sym}$, $U_{slots}$) of DL/UL, the MT may determine/configurate the TDD DL/UL information of the RU in the same manner as this.

Alternatively, the MT may determine/configurate the TDD-UL-DL-configurationDedicated information MT-specifically overridden for the TDD-UL-DL-configurationCommon information in the same manner as the TDD DL/UL information of the RU.

Method 2: New TDD DL/UL information is configured to an RU.

The RU does not have its own decision capability. Therefore, the MT may receive TDD DL/UL configuration information of the RU via side control information. That is, the MT may receive semi-static TDD DL/UL information applied to the RU from the gNB. The semi-static TDD DL/UL information applied to the RU may be configured independently of TDD resource allocation information configured for operation of the MT and may be applied only for operation of the RU. The method has the advantage that the TDD DL/UL information of the RU can be configured more link-adaptively when compared with the method 1.

The following two methods of determining the semi-static TDD DL/UL information applied to the RU may be considered in a similar context to the method 1. The two methods include 1) a method for an MT to newly receive all common/dedicated TDD resource allocation information of an RU from a gNB via side control information and for the MT to configure the common/dedicated TDD resource allocation information to the RU, or 2) a method for an MT to configure TDD-UL-DL-configuration common information configured by a gNB to an RU as common TDD resource allocation information and for the MT to receive dedicated TDD resource allocation information from the gNB via side control information and override the dedicated TDD resource allocation information for TDD-UL-DL configuration common information.

**Method of determining flexible resource (F-resource) of semi-static TDD transmission information of RU**

In a process of configuring semi-static TDD resource allocation information of an RU, there may be a flexible resource (F-resource) which is a resource not allocated in DL/UL.

More specifically, common TDD DL/UL information and/or dedicated TDD DL/UL information are configured in semi-static TDD DL/UL information of the RU, and then resources that are no longer allocated as DL or UL remain as F-resources.

In the F-resource of general semi-static TDD resource allocation information, dynamic TDD DL/UL information through a slot format indicator (SFI) of PDCCH DCI format 2_0 may be indicated based on a procedure as shown in the following Table 6.

[Table 6]

| |
|---|
| 11.1.1 UE procedure for determining slot format<br>This clause applies for a serving cell that is included in a set of serving cells configured to a UE by *slotFormatCombToAddModList* and *slotFormatCombToReleaseList, availableRB-SetsToAddModList* and *availableRB-SetsToReleaseList, switchTriggerToAddModList* and *switchTriggerToReleaseList,* or *co-DurationsPerCellToAddModList* and *co-DurationsPerCellToReleaseList.* If a UE is configured by higher layers with parameter *SlotFormatIndicator,* the UE is provided an SFI-RNTI by *sfi-RNTI* and with a payload size of DCI format 2_0 by *dci-PayloadSize.*<br>The UE is also provided in one or more serving cells with a configuration for a search space set s and a corresponding CORESET p for monitoring $M_{p,s}^{(L_{\text{SFI}})}$ PDCCH candidates for DCI format 2_0 with a CCE aggregation level of $L_{\text{SFI}}$ CCEs as described in clause 10.1. The $M_{p,s}^{(L_{\text{SFI}})}$ PDCCH candidates are the first $M_{p,s}^{(L_{\text{SFI}})}$ PDCCH candidates for CCE aggregation level $L_{\text{SFI}}$ for search space set s in CORESET p.<br>For each serving cell in the set of serving cells, the UE can be provided:<br>- an identity of the serving cell by *servingCellId*<br>- a location of a SFI-index field in DCI format 2_0 by *positionInDCI*<br>- a set of slot format combinations by *slotFormatCombinations,* where each slot format combination in the set of slot format combinations includes<br>- one or more slot formats indicated by a respective *slotFormats* for the slot format combination, and<br>- a mapping for the slot format combination provided by *slotFormats* to *a* corresponding SFI-index field value in DCI format 2_0 provided by *slotFormatCombinationId* |

There is no definition in the NCR as to how to determine semi-static TDD F-resource of the RU. However, it may be considered that the dynamic TDD DL/UL information of the RU is indicated through the F-resource.

Since the RU has no control function, a procedure of indicating dynamic TDD DL/UL information to the RU cannot be performed by an SFI indication procedure of PDCCH DCI format 2_0 which is a general indication method of dynamic TDD DL/UL information of the existing NR. Therefore, an operation in which the MT is indicated, from the gNB, the dynamic TDD DL/UL information of the RU via side control information may be considered as a new procedure of indicating dynamic TDD DL/UL information of the RU.

That is, the gNB may provide the dynamic TDD DL/UL information of the RU to the MT via the side control information. The MT may be indicated the dynamic TDD DL/UL information of the RU from the gNB via MCE-CE and/or DCI. Hereinafter, the indication is referred to as dynamic TDD DL/UL indication information.

And, the indication may be performed/applied only to resources pre-allocated/pre-configured as the semi-static TDD F-resource. In addition, a method of determining the semi-static TDD F-resource of the RU to be OFF may also be considered. Here, determining to be OFF means that no transmission is performed in a slot/symbol configured as the F-resource in the semi-static TDD resource allocation information of the RU. That is, the RU may not perform an operation of forwarding a signal received from the gNB to the UE in the F-resource and may not perform an operation of forwarding a signal received from the UE to the gNB.

Similar to this, the present disclosure proposes a method of indicating dynamic TDD DL/UL information of an RU for a semi-static TDD F-resource of the RU and a method of processing/determining the semi-static TDD F-resource to be Off.

Method 1. Dynamic TDD DL/UL information of an RU indicated via side control information is overridden in a semi-static TDD F-resource of the RU.

A dynamic indication may be needed depending on a transmission pattern of the RU. In this case, an MToverrides dynamic TDD DL/UL information of the RU indicated by the gNB via side control information with respect to the semi-static TDD F-resource of the RU.

For example, if a beam failure occurs in the RU, the MT may perform a beam failure detection and beam failure recovery (BFR) request procedure for beam failure recovery (BFR). The MT needs to recover a beam in units of slot/symbol in the RRC_CONNECTED state. Further, the MT needs to dynamically recover the beam. In the beam failure recovery procedure, the MT may receive dynamic TDD DL/UL information of the RU from the gNB via side control information. Here, the dynamic TDD DL/UL information of the RU may be utilized in the semi-static TDD F-resource of the RU.

Method 2: The semi-static TDD F-resource of the RU is processed to be OFF.

FIG. 12 illustrates an example of correcting a propagation delay on an RU-UE link according to an embodiment of the present disclosure.

Referring to FIG. 12, unlike the method 1, the dynamic TDD DL/UL information may not be indicated for the semi-static TDD F-resource of the RU. In this case, no transmission may be performed in the semi-static TDD F-resource of the RU.

Considering a DL/UL propagation delay that may occur on an RU-UE link, processing the semi-static TDD F-resource of the RU to be Off has the advantage that the semi-static TDD F-resource can serve as a guard time of the RU without separate signaling.

As illustrated in FIG. 12, the F-resource of the RU may be process to be Off to correct a propagation delay ($\delta_D$ + $\delta_U$) from a perspective of the RU that may occur in DL/UL switching on the RU-UE link.

## Indication method for TDD DL/UL information of RU

The semi-static/dynamic TDD DL/UL information should be appropriately indicated to the RU so that the RU uses the configured semi-static/dynamic TDD DL/UL information of the RU described above for actual transmission and reception.

If semi-static TDD DL/UL information is configured to the RU and dynamic TDD DL/UL information is indicated to the RU when TDD resource allocation information of the RU is configured, the semi-static TDD DL/UL information and the dynamic TDD DL/UL information may collide with each other. For example, if DL is allocated to a slot via semi-static TDD resource allocation information of the RU, and UL is indicated to the slot via dynamic TDD information of the RU, the semi-static TDD DL/UL information and the dynamic TDD DL/UL information may overlap.

A criterion is needed for how indication should be given in the overlapping TDD DL/UL configuration situation as above, and the following indication method is proposed to prevent a collision in the TDD resource allocation process.

Method 1: Semi-static TDD information of the RU in resources allocated in DL or UL cannot be overridden with dynamic TDD DL/UL information of the RU.

In other words, it means that the semi-static TDD DL/UL information has priority over the dynamic TDD DL/UL information indicated later. This is described in detail as follows.

FIG. 13 illustrates an example of a resource allocation method according to an embodiment of the present disclosure.

Referring to FIG. 13, in the semi-static TDD resource allocation information of the RU within a duration of periodicity P (msec), if only the DL is configured without the F-resource in all symbols within a slot t1, the dynamic TDD DL/UL information of the RU cannot be used even if the dynamic TDD DL/UL information of the RU is indicated in the slot t1. That is, the semi-static TDD DL/UL information cannot be overridden with the dynamic TDD DL/UL information in the slot $t_1$ in terms of priority of dynamic TDD DL/UL information.

Method 2: Only semi-static TDD F-resources of the RU can be overridden with dynamic TDD resource allocation information of the RU.

As in the above method 1, a resource allocated to the semi-static TDD DL/UL of the RU cannot be overridden with indicated dynamic DL/UL information of the RU, and only when the resource is configured with a semi-static TDD F-resource, the resource is overridden with the indicated dynamic DL/UL information of the RU. This is described in detail as follows.

FIG. 14 illustrates an example of a resource allocation method according to another embodiment of the present disclosure.

Referring to FIG. 14, semi-static TDD DL resources of the RU may be configured in seven symbols of 14 symbols included in the slot t1 of the RU, and semi-static TDD F-resources of the RU may be configured in the remaining seven symbols. In this case, the MT may override only the seven symbols, to which the semi-static TDD F-resources are allocated, with dynamic TDD information (D/D/F/F/F/U/U) of the RU.

In addition, if the dynamic TDD information of the RU indicated in the semi-static TDD F-resource is the F-resource, the RU may process a slot/symbol duration of the F-resource to be Off. That is, the RU may not perform an operation of forwarding a signal received from the gNB to the UE in the F-resource and may not perform an operation of forwarding a signal received from the UE to the gNB.

FIG. 15 is a flowchart illustrating a signal transmission/reception method according to an embodiment of the present disclosure.

In FIG. 15, a first device may be an MT, and a second device may be an RU. Further, the first device and the second device may be included in one electronic device (e.g., an NCR).

Referring to FIG. 15, the first device may receive, from a base station, semi-static TDD UL-DL configuration common information and semi-static TDD UL-DL configuration dedicated information, in S1510. The semi-static TDD UL-DL configuration common information may be commonly applied to the first device and the second device, and the semi-static TDD UL-DL configuration dedicated information may be dedicatedly applied to the second device.

The first device may determine semi-static TDD resource allocation information to be applied to the second device, in S1520.

The semi-static TDD resource allocation information may include information of a flexible resource that is not allocated in DL or UL, and the flexible resource may be a propagation delay between the UL and the DL. If a beam failure occurs in the second device, the flexible resource may be used to perform a beam failure recovery (BFR) procedure.

In an embodiment, the first device may determine the semi-static TDD resource allocation information to be applied to the second device by overriding the semi-static TDD UL-DL configuration dedicated information for the semi-static TDD UL-DL configuration common information.

In some embodiments, the first device may receive dynamic TDD UL-DL information from the base station. The first device may override the dynamic TDD UL-DL information to thereby determine allocation information of the flexible resource within the semi-static TDD resource allocation information to be applied to the second device as allocation information of a DL resource or an UL resource.

In some embodiments, the first device may receive the dynamic TDD UL-DL information from the base station, and the allocation information of the UL resource or the DL resource within the semi-static TDD resource allocation information to be applied to the second device may have a priority over the dynamic TDD UL-DL information.

The second device may forward a signal based on the semi-static TDD resource allocation information, in S1530. The second device may forward a signal from the base station to a UE based on the semi-static TDD resource allocation information. Alternatively, the second device may forward a signal from the UE to the base station.

If the semi-static TDD resource allocation information includes the information of the flexible resource that is not allocated in the DL or the UL, transmission and reception of the signal by the second device may not be performed in the flexible resource.

If the allocation information of the UL resource or the DL resource within the semi-static TDD resource allocation information to be applied to the second device has a priority over the dynamic TDD UL-DL information, transmission and reception of the signal by the second device may be performed in the UL resource or the DL resource based on the semi-static TDD resource allocation information.

FIG. 16 is a flowchart illustrating a signal transmission/reception method according to another embodiment of the present disclosure.

In FIG. 16, a first device may be an MT, and a second device may be an RU. Further, the first device and the second device may be included in one electronic device (e.g., an NCR).

Referring to FIG. 16, a base station may transmit, to the first device, semi-static TDD UL-DL configuration common information and semi-static TDD UL-DL configuration dedicated information, in S1610. The semi-static TDD UL-DL configuration common information may be commonly applied to the first device and the second device, and the semi-static TDD UL-DL configuration dedicated information may be dedicatedly applied to the second device.

The base station may transmit TDD resource allocation information of the second device to the first device, in S1620. Here, semi-static TDD resource allocation information of the second device may be information in which the semi-static TDD UL-DL configuration dedicated information is overridden for the semi-static TDD UL-DL configuration common information.

In an embodiment, the base station may transmit dynamic TDD UL-DL information to the first device. The semi-static TDD resource allocation information may include information of a flexible resource that is not allocated in DL or UL. The flexible resource may be a propagation delay between the UL and the DL.

Allocation information of an UL resource or a DL resource within the semi-static TDD resource allocation information to be applied to the second device may have a priority over the dynamic TDD UL-DL information.

The base station may transmit and receive a signal based on the semi-static TDD resource allocation information, in S1630. The base station may transmit a signal to be forwarded to a UE to the second device based on the semi-static TDD resource allocation information. Further, the base station may receive the forwarded signal from the second device based on the semi-static TDD resource allocation information. Here, the forwarded signal may be a signal transmitted to the second device by the UE.

## Communication system applicable to the present disclosure

FIG. 17 illustrates a communication system applied to various embodiments of the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE), 6G wireless communication) and may be referred to as communication/radio/5G devices//6G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, or a 6G network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Wireless device applicable to the present disclosure

Examples of wireless devices to which various embodiments of the present disclosure are applied are described below.

FIG. 18 illustrates wireless devices applicable to various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices.

The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates another example of wireless devices applicable to various embodiments of the present disclosure.

According to FIG. 19, a wireless device may include at least one processor 102 and 202, at least one memory 104 and 204, at least one transceiver 106 and 206, one or more antennas 108 and 208.

A difference between the example of the wireless device illustrated in FIG. 18 and the example of the wireless device illustrated in FIG. 19 is that the processors 102 and 202 and the memories 104 and 204 are separated from each other in FIG. 18, but the memories 104 and 204 are included in the processors 102 and 202 in FIG. 19.

Here, the detailed description of the processors 102 and 202, the memories 104 and 204, the transceivers 106 and 206, and the antennas 108 and 208 are the same as described above, and thus the description of the repeated description is omitted in order to avoid unnecessary repetition of description.

Examples of signal processing circuit to which various embodiments of the present disclosure are applied are described below.

FIG. 20 illustrates a signal processing circuit for a transmission signal.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 18. Hardware elements of FIG. 20 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

FIG. 21 illustrates an example of a wireless communication device applicable to the present disclosure.

Referring to FIG. 21, a wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 may implement functions, procedures and methods described in the present disclosure. The processor 2310 in FIG. 21 may be the processors 102 and 202 in FIG. 19.

The memory 2330 is connected to the processor 2310 and stores information related to operations of the processor 2310. The memory 2330 may be located inside or outside the processor 2310 and connected to the processor through various techniques such as wired connection and wireless connection. The memory 2330 in FIG. 21 may be the memories 204 and 204 in FIG. 19.

A user may input various types of information such as telephone numbers using various techniques such as pressing buttons of the keypad 2320 or activating sound using the microphone 2350. The processor 2310 may receive and process the information of the user and execute an appropriate function such as calling using the input telephone number. In some scenarios, data may be retrieved from the SIM card 2325 or the memory 2330 to execute appropriate functions. In some scenarios, the processor 2310 may display various types of information and data on the display 2315 for user convenience.

The transceiver 2335 is connected to the processor 2310 and transmit and/or receive radio frequency (RF) signals. The processor 2310 may control the transceiver 2335 in order to start communication or to transmit RF signals including various types of information or data such as voice communication data. The transceiver 2335 includes a transmitter and a receiver for transmitting and receiving the RF signals. The antenna 2340 may facilitate transmission and reception of the RF signals. In some implementation examples, when the transceiver receives an RF signal, the transceiver may forward and convert the signal into a baseband frequency for processing performed by the processor. The signal may be processed through various techniques, such as converting into audible or readable information, and output through the speaker 2345. The transceiver 2335 in FIG. 21 may be the transceivers 106 and 206 in FIG. 19.

Although not illustrated in FIG. 21 various components such as a camera and a universal serial bus (USB) port may be additionally included in the UE. For example, the camera may be connected to the processor 2310.

FIG. 21 is merely an example of implementation with respect to the UE, and the present disclosure is not limited thereto. The UE need not essentially include all the components illustrated in FIG. 21. That is, some of the components, for example, the keypad 2320, the GPS chip 2360, the sensor 2365, and the SIM card 2325 may not be essential components. In this case, they may not be included in the UE.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Although embodiments of the present disclosure have been described using the LTE system, the LTE-A system and the NR system, this is merely an example and embodiments of the present disclosure can be applied to any communication system corresponding to the above definition.

In the present disclosure, specific operations described to be performed by the base station may be performed by an upper node of the base station in some cases. That is, in a network including a plurality of network nodes including the base station, it is obvious that various operations performed for communication with the UE can be performed by the base station or network nodes other than the base station. The base station may be replaced with terms such as a fixed station, Node B, eNode B (eNB), and an access point, and the name of the base station may be used as a comprehensive term including a remote radio head (RRH), eNB, a transmission point (TP), a reception point (RP), a relay, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

**1.** A method of operating an electronic device in a wireless communication system, the electronic device including a first device and a second device, the method comprising:

receiving, by the first device, from a base station, semi-static time division duplex (TDD) uplink-downlink (UL-DL) configuration common information and semi-static TDD UL-DL configuration dedicated information;
determining, by the first device, semi-static TDD resource allocation information to be applied to the second device by overriding the semi-static TDD UL-DL configuration dedicated information for the semi-static TDD UL-DL configuration common information; and
forwarding, by the second device, based on the semi-static TDD resource allocation information, a signal from the base station to a user equipment (UE) or a signal from the UE to the base station.

**2.** The method of claim 1, wherein the semi-static TDD resource allocation information includes information of a flexible resource that is not allocated in an UL or a DL, and
wherein the flexible resource is a propagation delay between the UL and the DL, and a transmission and a reception by the second device are not performed in the flexible resource.

**3.** The method of claim 1, wherein the semi-static TDD resource allocation information includes information of a flexible resource that is not allocated in a DL or an UL, and
wherein, based on a beam failure occurring, the flexible resource is used to perform a beam failure recovery (BFR) procedure.

**4.** The method of claim 3, further comprising:

receiving, by the first device, dynamic TDD UL-DL information from the base station,
wherein the beam failure recovery procedure is performed based on the dynamic TDD UL-DL information.

**5.** The method of claim 1, wherein the semi-static TDD UL-DL configuration common information is commonly applied to the first device and the second device, and
wherein the semi-static TDD UL-DL configuration dedicated information is dedicatedly applied to the second device.

**6.** The method of claim 1, further comprising:

receiving, by the first device, dynamic TDD UL-DL information from the base station,
wherein the semi-static TDD resource allocation information includes allocation information of a flexible resource that is not allocated in an UL or a DL, and
wherein the first device overrides the dynamic TDD UL-DL information to thereby determine the allocation information of the flexible resource within the semi-static TDD resource allocation information to be applied to the second device as allocation information of an UL resource or a DL resource.

**7.** The method of claim 1, further comprising:

receiving, by the first device, dynamic TDD UL-DL information from the base station,
wherein allocation information of an UL resource or a DL resource within the semi-static TDD resource allocation information to be applied to the second device has a priority over the dynamic TDD UL-DL information, and
wherein a transmission and a reception by the second device are performed in the UL resource or the DL resource based on the semi-static TDD resource allocation information.

**8.** A method of operating a base station in a wireless communication system, the method comprising:

transmitting semi-static time division duplex (TDD) uplink-downlink (UL-DL) configuration common information and semi-static TDD UL-DL configuration dedicated information to a first device of an electronic device including the first device and a second device;
transmitting semi-static TDD resource allocation information of the second device to the first device, the semi-static TDD resource allocation information of the second device being information in which the semi-static TDD UL-DL configuration dedicated information is overridden for the semi-static TDD UL-DL configuration common information; and
based on the semi-static TDD resource allocation information, receiving a signal from a user equipment (UE) from the second device or transmitting a signal to be forwarded to the UE to the second device.

**9.** The method of claim 8, wherein the semi-static TDD UL-DL configuration common information is commonly applied to the first device and the second device, and
wherein the semi-static TDD UL-DL configuration dedicated information is dedicatedly applied to the second device.

**10.** The method of claim 8, wherein the semi-static TDD resource allocation information includes information of a flexible resource that is not allocated in an UL or a DL.

**11.** The method of claim 10, further comprising:

transmitting dynamic TDD UL-DL information to the first device,
wherein allocation information of the flexible resource within the semi-static TDD resource allocation information to be applied to the second device is determined as allocation information of an UL resource or a DL resource by overriding the dynamic TDD UL-DL information.

**12.** The method of claim 8, further comprising:

transmitting dynamic TDD UL-DL information to the first device,
wherein allocation information of an UL resource or a DL resource within the semi-static TDD resource allocation information to be applied to the second device has a priority over the dynamic TDD UL-DL information, and
wherein a transmission and a reception by the second device are performed in the UL resource or the DL resource based on the semi-static TDD resource allocation information.

**13.** An electronic device in a communication system, comprising:

a first device including a first transceiver;
a second device including a second transceiver;
at least one processor; and
at least one memory operably connectable to the at least one processor and configured to store instructions performing operations based on being executed by the at least one processor,
wherein the operations comprise all steps of a method according to any one of claims 1 to 7.

**14.** A base station in a communication system, comprising:

a transceiver;
at least one processor; and
at least one memory operably connectable to the at least one processor and configured to store instructions performing operations based on being executed by the at least one processor,
wherein the operations comprise all steps of a method according to any one of claims 8 to 12.

**15.** A control device controlling an electronic device in a communication system, comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

**16.** A control device controlling a base station (BS) in a communication system, comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 12.

**17.** One or more non-transitory computer readable mediums storing one or more instructions,

wherein the one or more instructions perform operations based on being executed by one or more processors, and
wherein the operations comprise all steps of a method according to any one of claims 1 to 7.

**18.** One or more non-transitory computer readable mediums storing one or more instructions,

wherein the one or more instructions perform operations based on being executed by one or more processors, and
wherein the operations comprise all steps of a method according to any one of claims 8 to 12.

【FIG. 1】

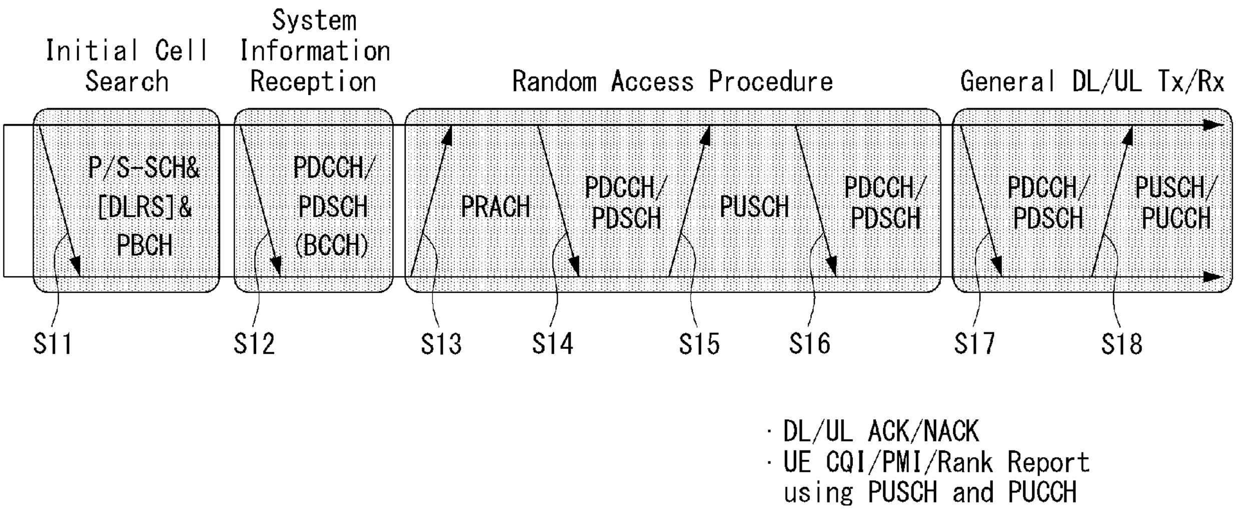
Initial Cell Search
System Information Reception
Random Access Procedure
General DL/UL Tx/Rx
P/S-SCH&
[DLRS]&
PBCH
PDCCH/
PDSCH
(BCCH)
PRACH
PDCCH/
PDSCH
PUSCH
PDCCH/
PDSCH
PDCCH/
PDSCH
PUSCH/
PUCCH
S11
S12
S13
S14
S15
S16
S17
S18
· DL/UL ACK/NACK
· UE CQI/PMI/Rank Report
using PUSCH and PUCCH

【FIG. 2】

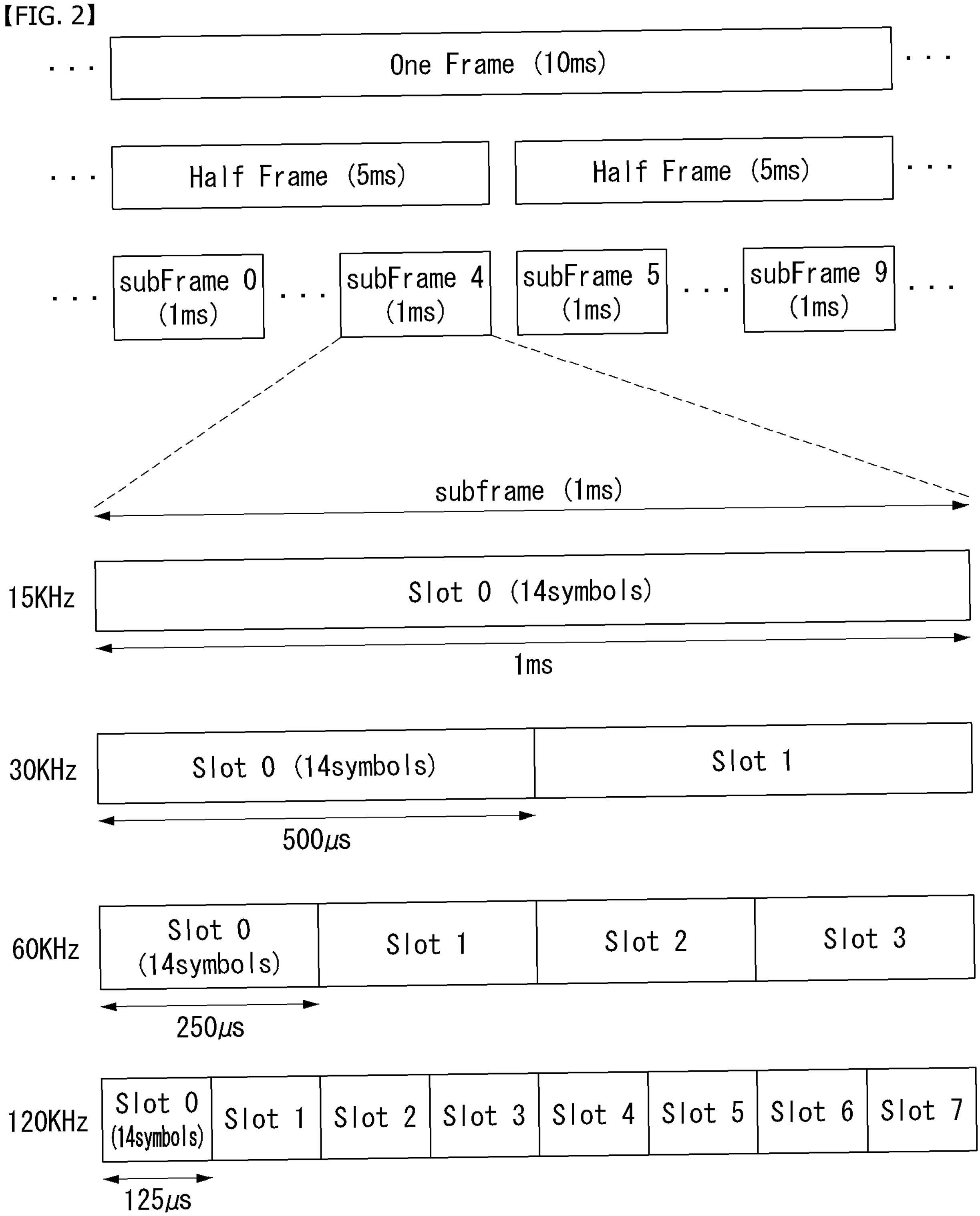
. . .
One Frame (10ms)
. . .
Half Frame (5ms)
Half Frame (5ms)
subFrame 0 (1ms)
subFrame 4 (1ms)
subFrame 5 (1ms)
subFrame 9 (1ms)
subframe (1ms)
15KHz
Slot 0 (14symbols)
1ms
30KHz
Slot 0 (14symbols)
Slot 1
500µs
60KHz
Slot 0 (14symbols)
Slot 1
Slot 2
Slot 3
250µs
120KHz
Slot 0 (14symbols)
Slot 1
Slot 2
Slot 3
Slot 4
Slot 5
Slot 6
Slot 7
125µs

【FIG. 3】

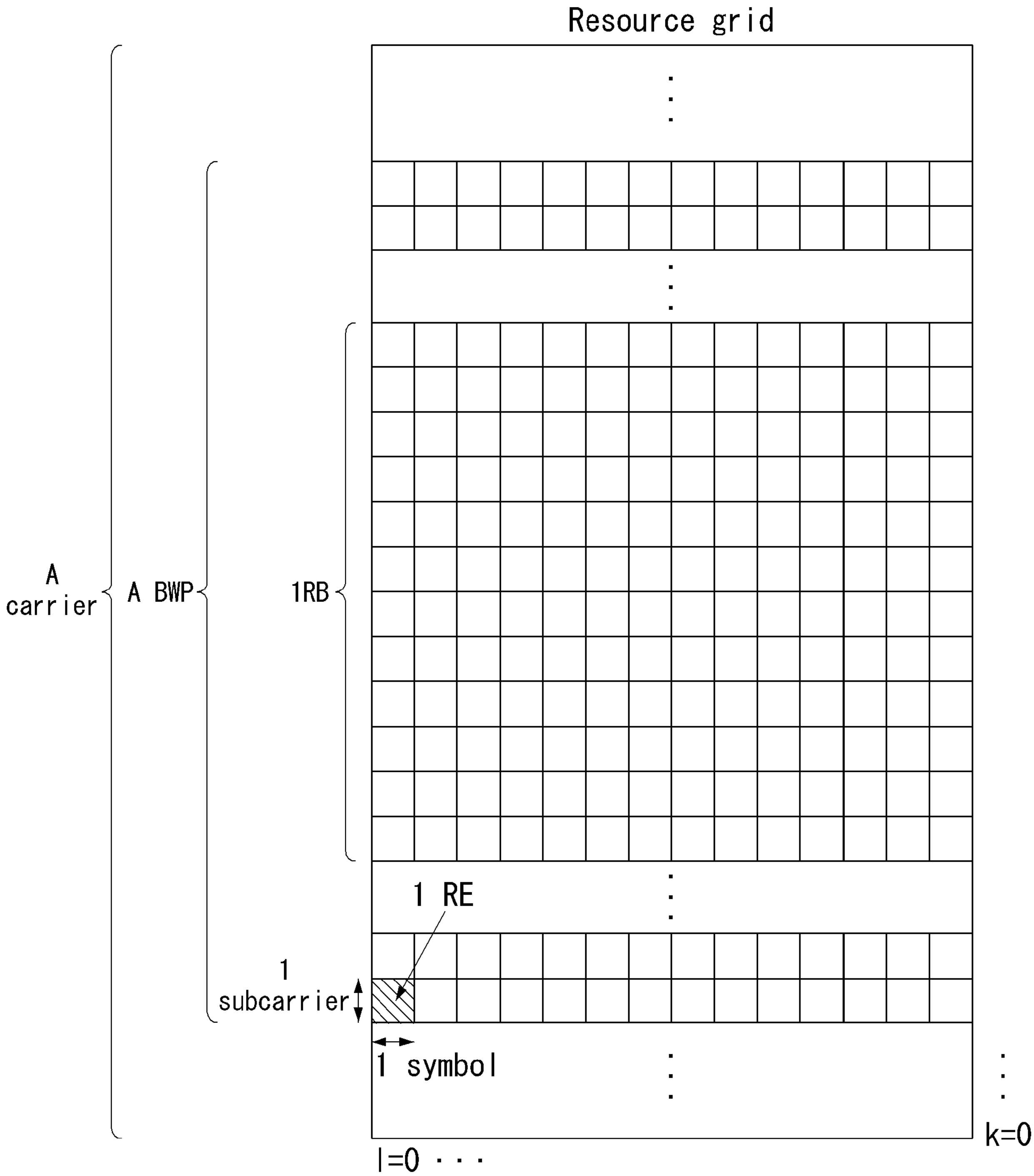
Resource grid
A
carrier
A BWP
1RB
1 RE
1
subcarrier
1 symbol
k=0
l=0 · · ·

【FIG. 4】

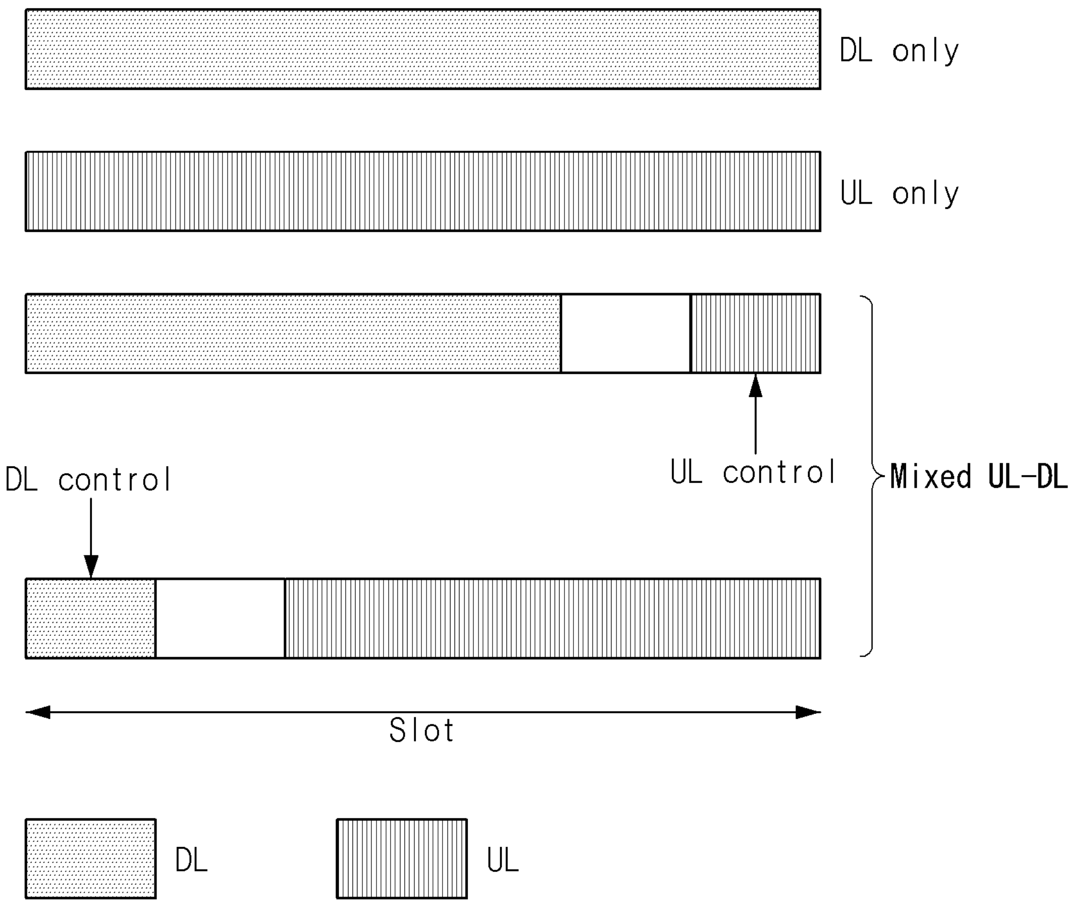


【FIG. 5】

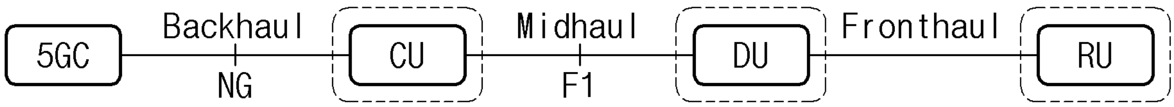


【FIG. 6】

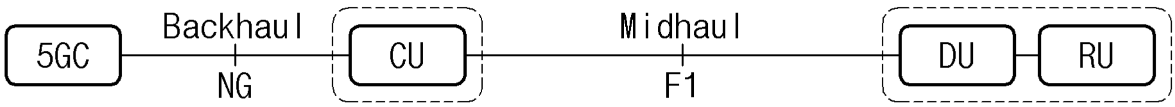


【FIG. 7】

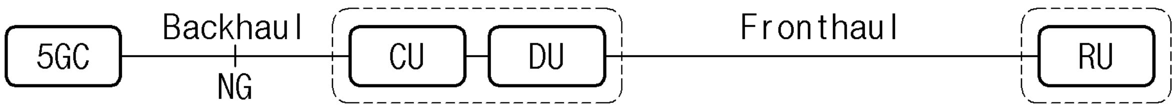

【FIG. 8】

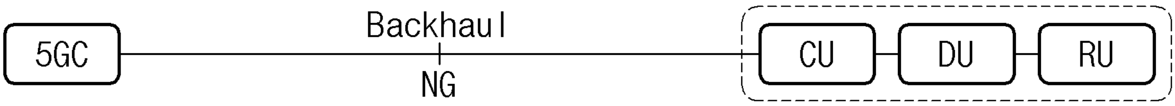


【FIG. 9】

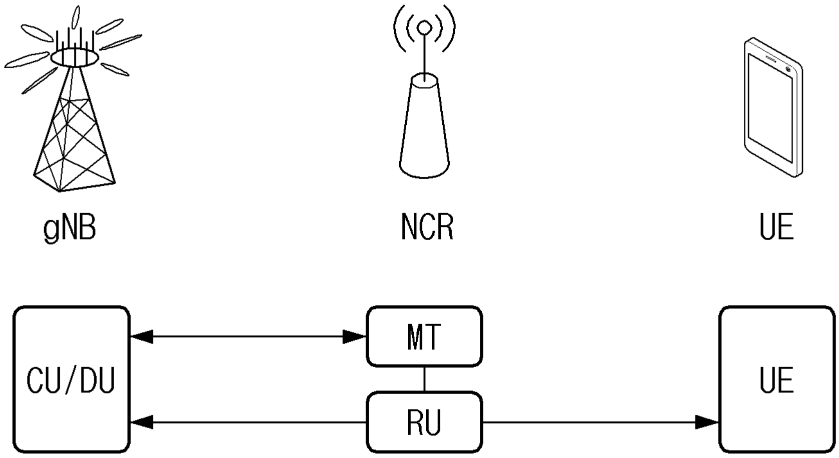


【FIG. 10】

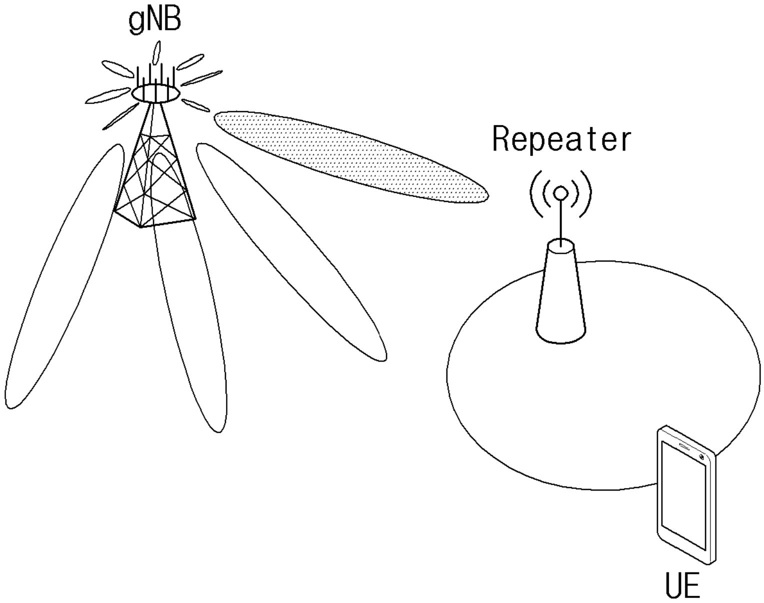

【FIG. 11】

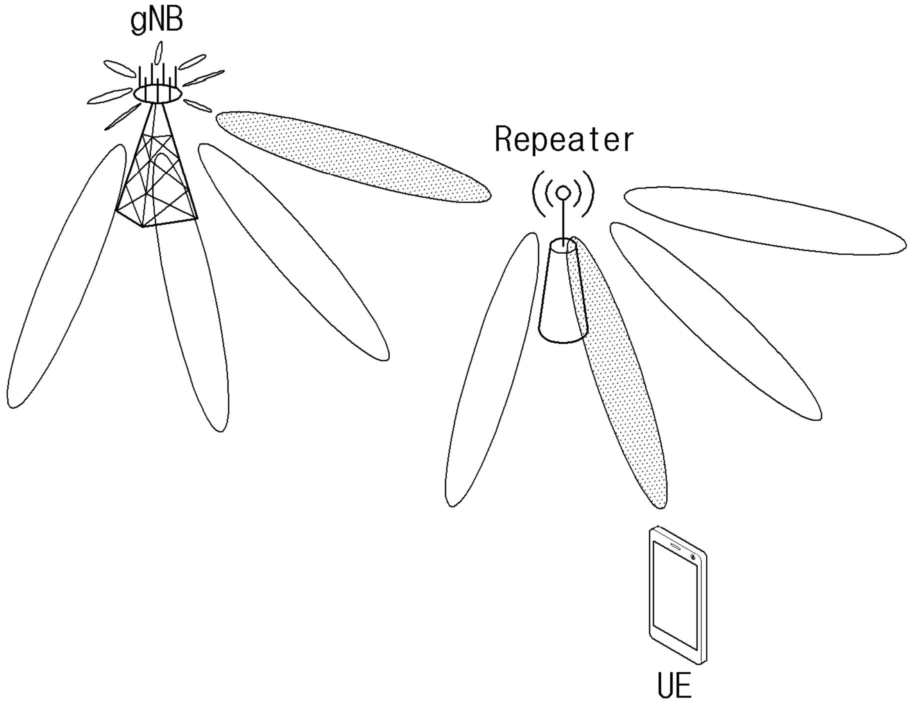
gNB
Repeater
UE

【FIG. 12】

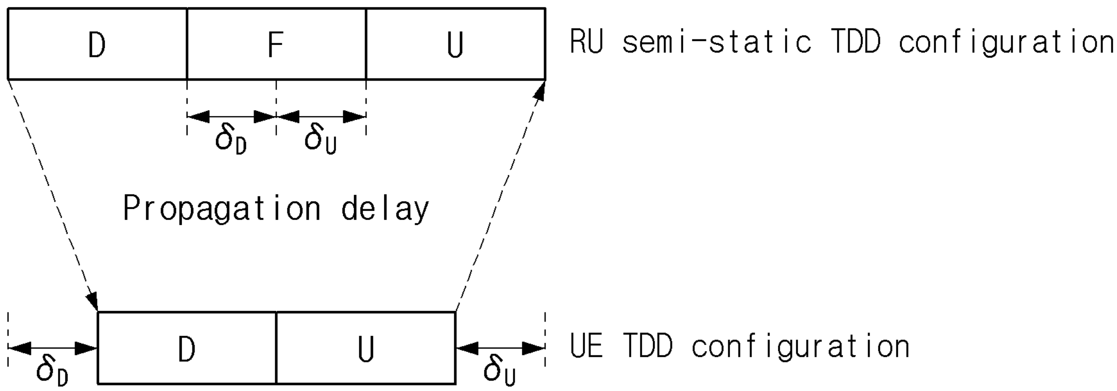
D
F
U
RU semi-static TDD configuration
$\delta_D$
$\delta_U$
Propagation delay
D
U
$\delta_D$
$\delta_U$
UE TDD configuration

【FIG. 13】

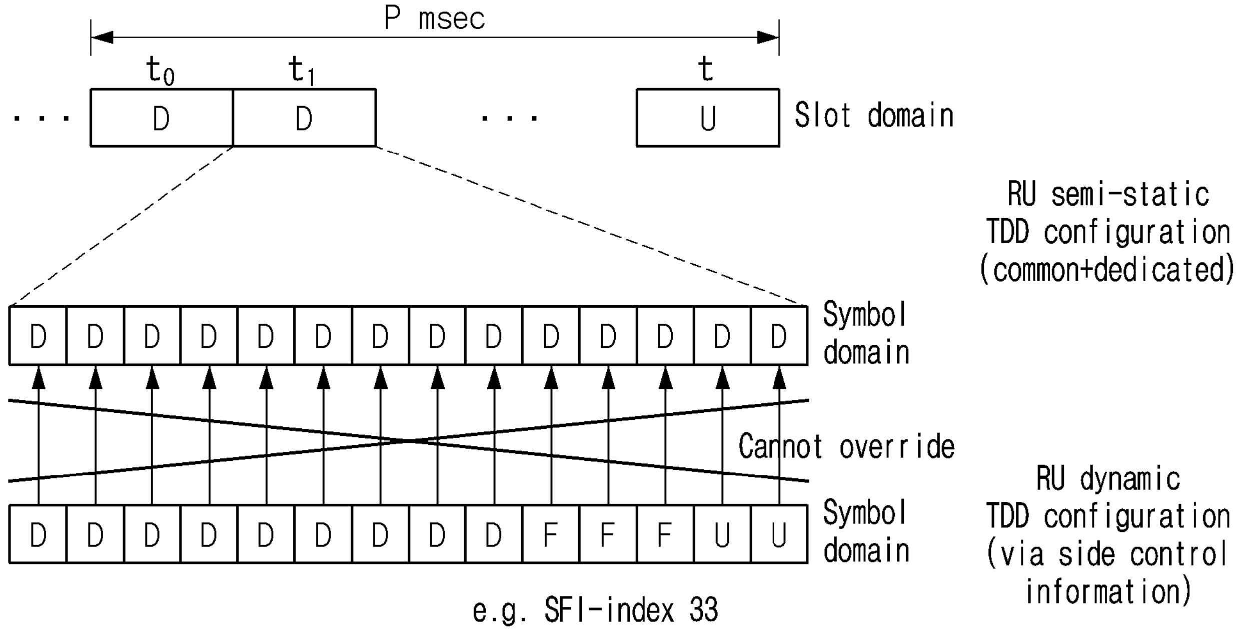
P msec
$t_0$
$t_1$
t
...
D
D
...
U
Slot domain
RU semi-static
TDD configuration
(common+dedicated)
D D D D D D D D D D D D D D
Symbol
domain
Cannot override
RU dynamic
TDD configuration
(via side control
information)
D D D D D D D D D F F F U U
Symbol
domain
e.g. SFI-index 33

【FIG. 14】

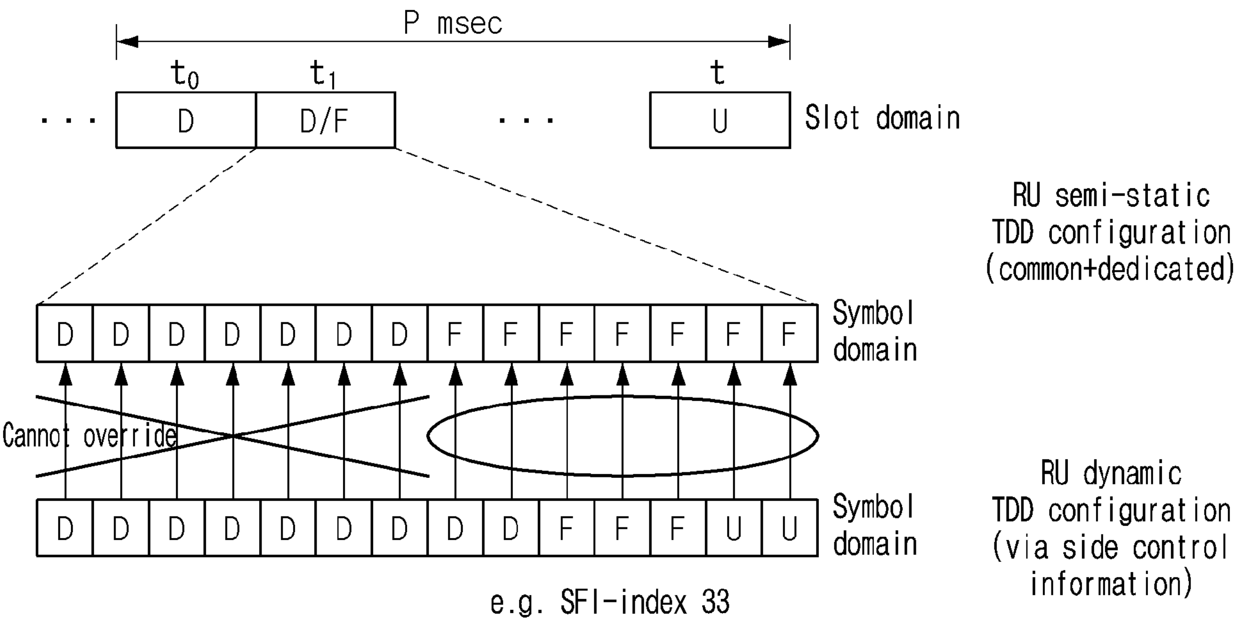
P msec
$t_0$
$t_1$
t
...
D
D/F
...
U
Slot domain
RU semi-static
TDD configuration
(common+dedicated)
D D D D D D D F F F F F F F
Symbol
domain
Cannot override
RU dynamic
TDD configuration
(via side control
information)
D D D D D D D D D F F F U U
Symbol
domain
e.g. SFI-index 33

【FIG. 15】

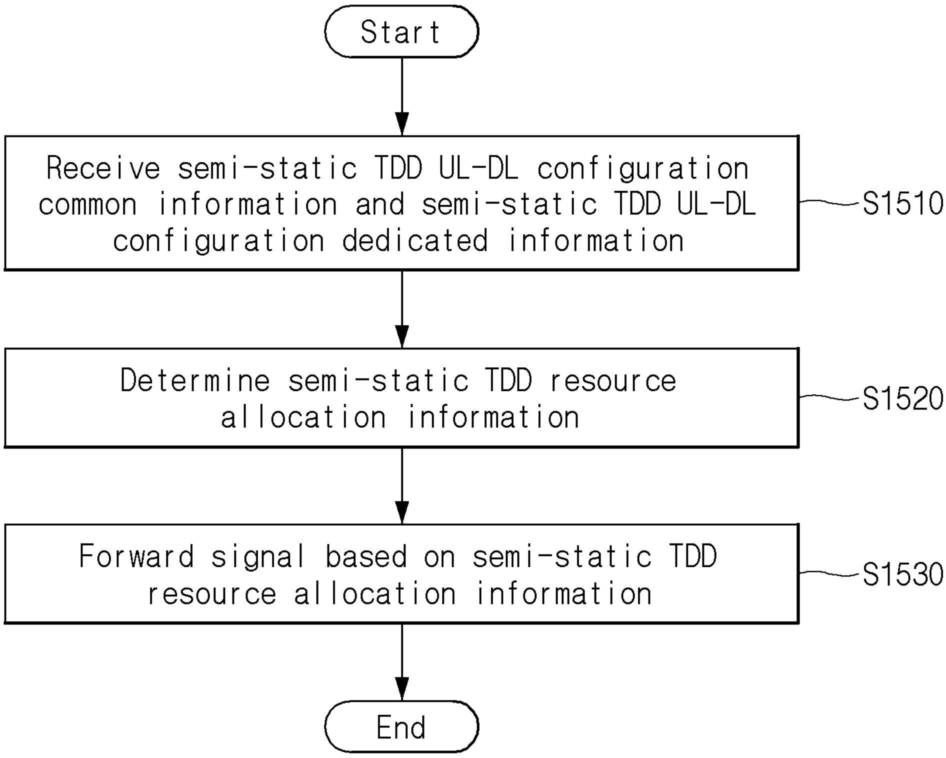
Start
Receive semi-static TDD UL-DL configuration common information and semi-static TDD UL-DL configuration dedicated information
S1510
Determine semi-static TDD resource allocation information
S1520
Forward signal based on semi-static TDD resource allocation information
S1530
End

【FIG. 16】

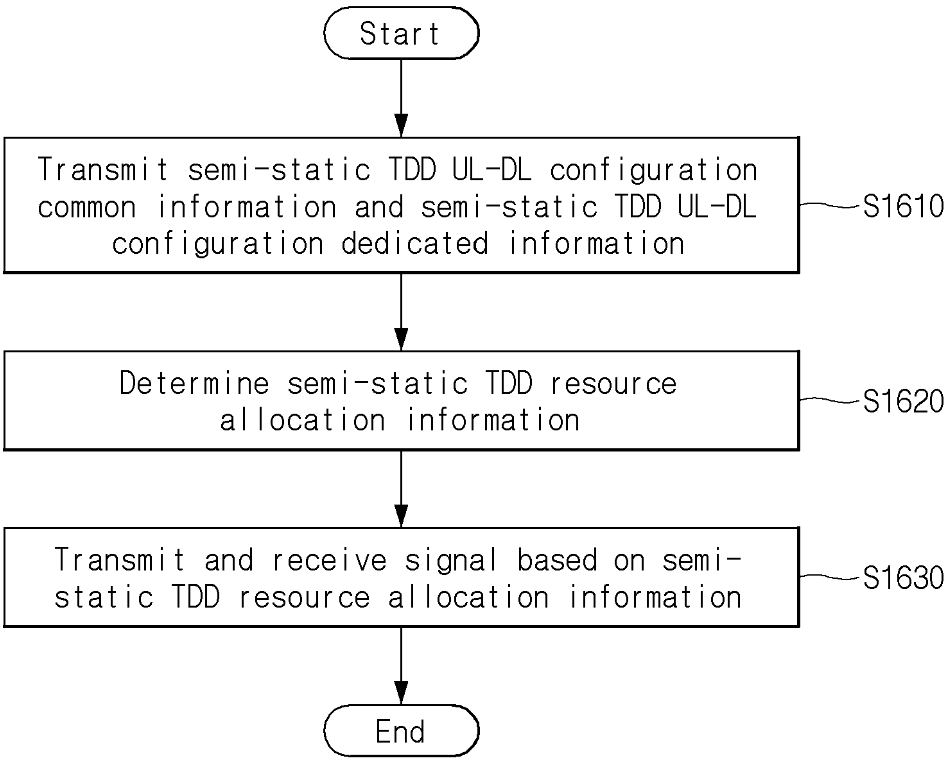
Start
Transmit semi-static TDD UL-DL configuration common information and semi-static TDD UL-DL configuration dedicated information
S1610
Determine semi-static TDD resource allocation information
S1620
Transmit and receive signal based on semi-static TDD resource allocation information
S1630
End

【FIG. 17】

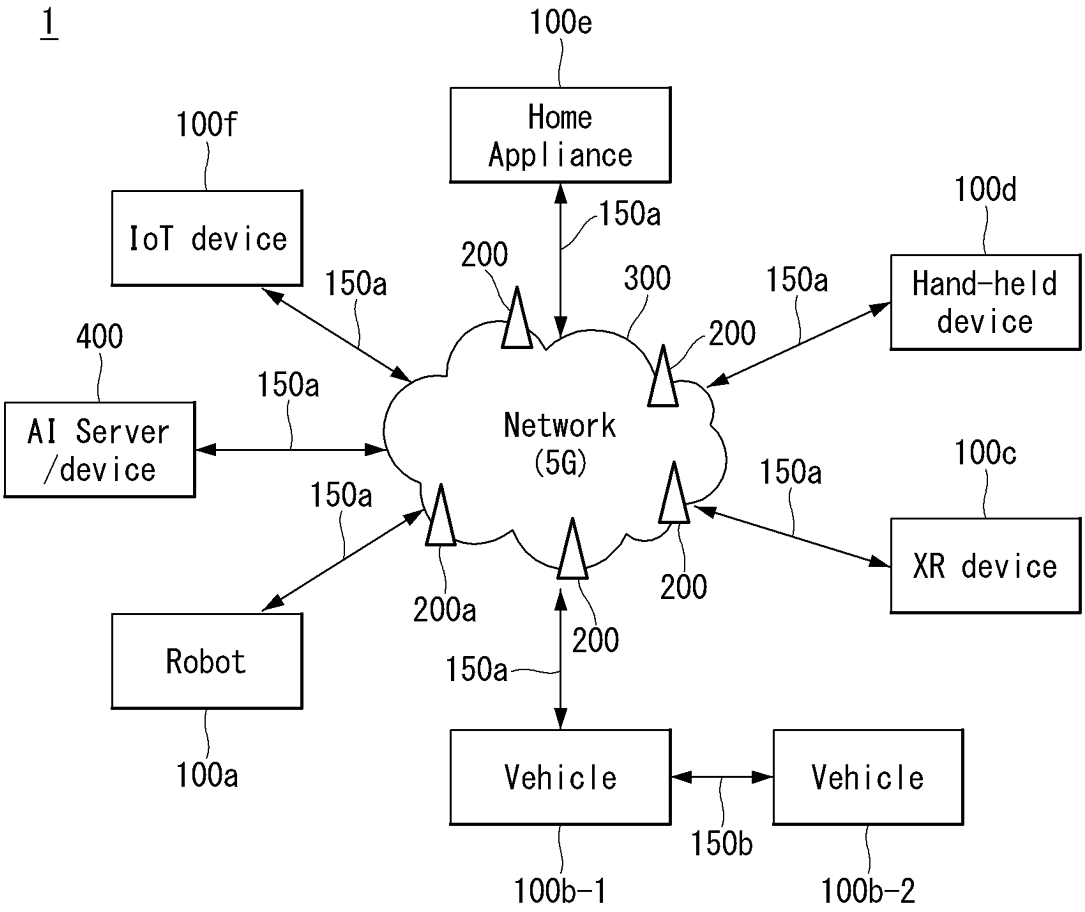
1
100e
Home Appliance
100f
IoT device
150a
200
300
100d
Hand-held device
400
AI Server /device
Network (5G)
100c
XR device
200a
Robot
100a
Vehicle
Vehicle
150b
100b-1
100b-2

【FIG. 18】

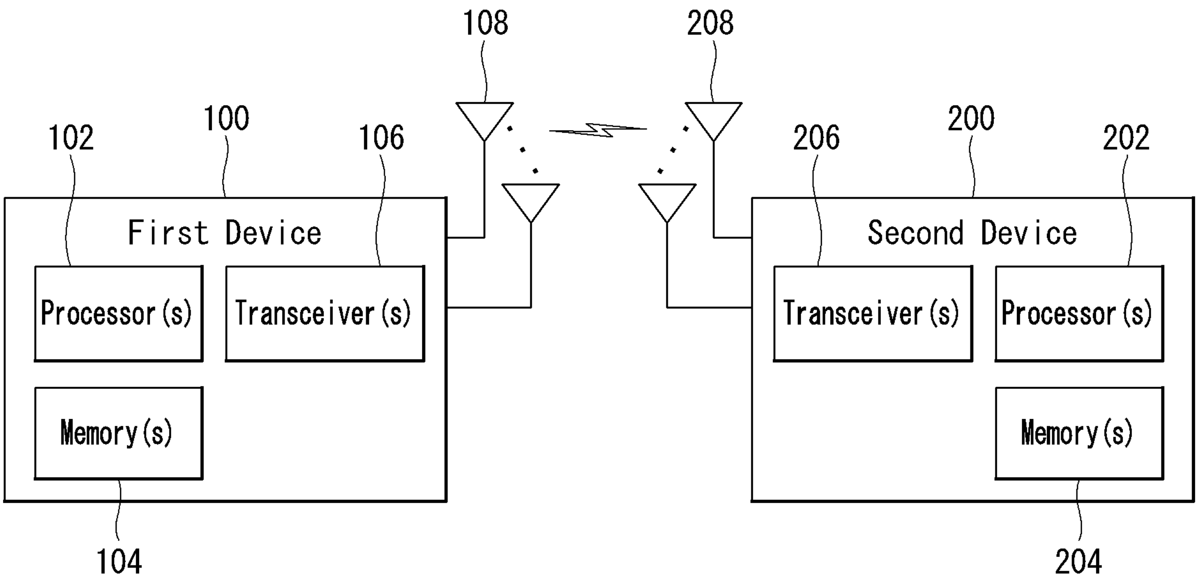
108
208
102
100
106
206
200
202
First Device
Processor(s)
Transceiver(s)
Memory(s)
Second Device
Transceiver(s)
Processor(s)
Memory(s)
104
204

【FIG. 19】

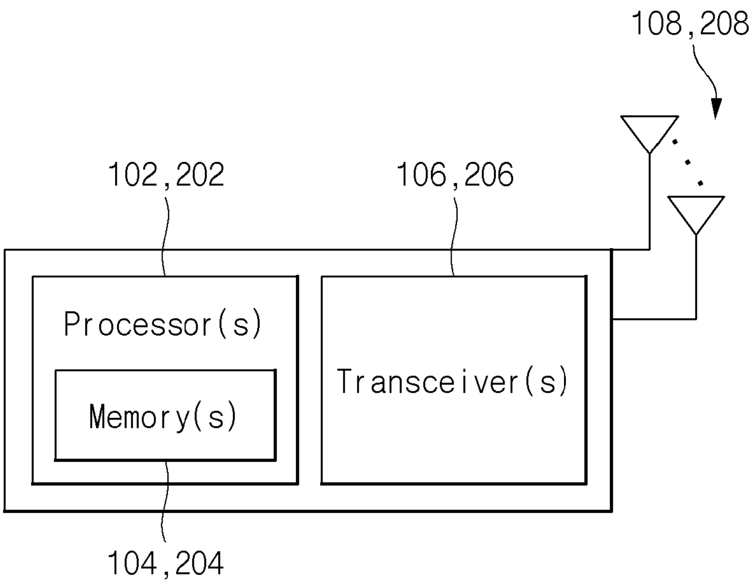
108,208
102,202
106,206
Processor(s)
Memory(s)
Transceiver(s)
104,204

【FIG. 20】

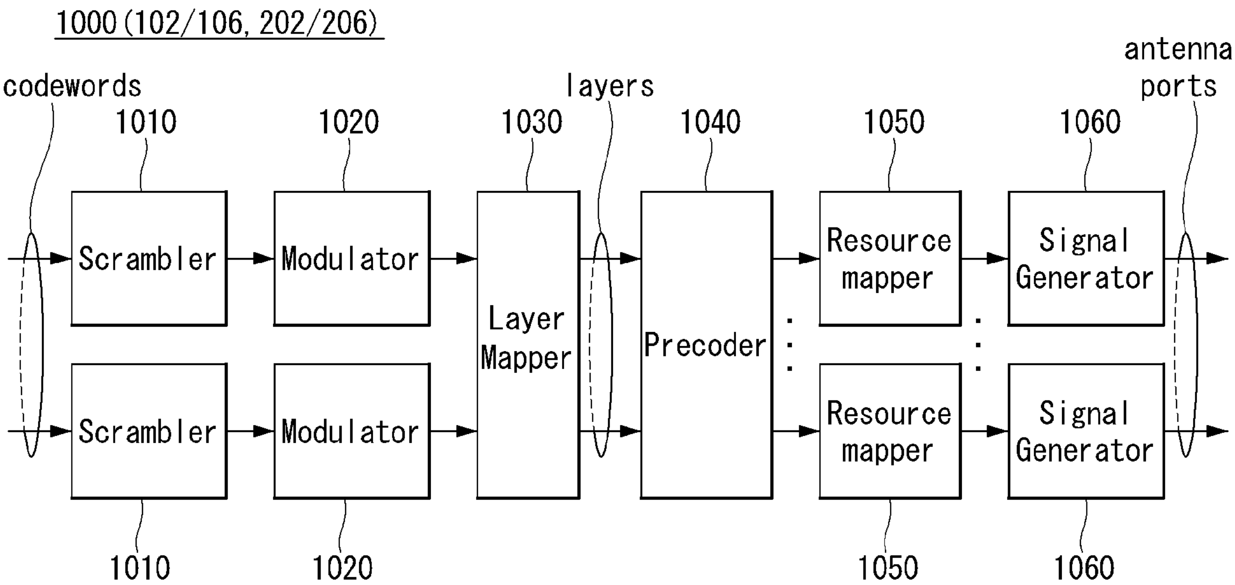
1000(102/106, 202/206)
codewords
layers
antenna ports
1010
1020
1030
1040
1050
1060
Scrambler
Modulator
Layer Mapper
Precoder
Resource mapper
Signal Generator
Scrambler
Modulator
Resource mapper
Signal Generator
1010
1020
1050
1060

【FIG. 21】

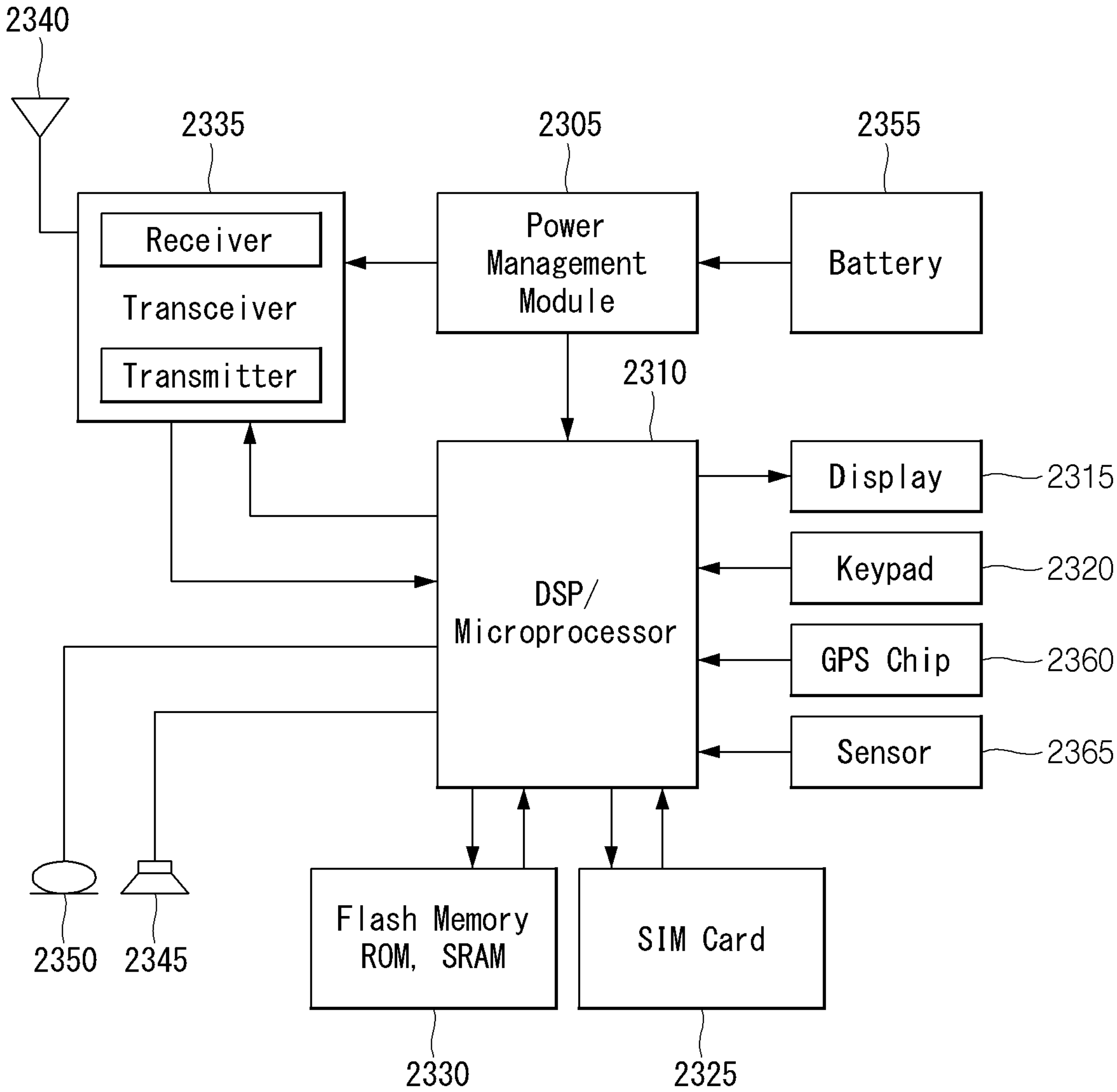
2340
2335
2305
2355
Receiver
Transceiver
Transmitter
Power
Management
Module
Battery
2310
Display
2315
Keypad
2320
DSP/
Microprocessor
GPS Chip
2360
Sensor
2365
2350
2345
Flash Memory
ROM, SRAM
SIM Card
2330
2325

**INTERNATIONAL SEARCH REPORT**

International application No.
**PCT/KR2023/004820**

**A. CLASSIFICATION OF SUBJECT MATTER**

**H04B 7/155**(2006.01)i; **H04W 72/04**(2009.01)i; **H04L 5/14**(2006.01)i

According to International Patent Classification (IPC) or to both national classification and IPC

**B. FIELDS SEARCHED**

Minimum documentation searched (classification system followed by classification symbols)

H04B 7/155(2006.01); H04L 5/14(2006.01); H04W 72/04(2009.01); H04W 76/02(2009.01); H04W 88/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TDD UL-DL configuration common, TDD UL-DL configuration dedicated, override, resource allocation information, forward

**C. DOCUMENTS CONSIDERED TO BE RELEVANT**

| Category* | Citation of document, with indication, where appropriate, of the relevant passages | Relevant to claim No. |
|---|---|---|
| A | US 2021-0297144 A1 (QUALCOMM INCORPORATED) 23 September 2021 (2021-09-23)<br>See paragraphs [0092]-[0109]; and claim 2. | 1-18 |
| A | HUAWEI et al. PDSCH/PUSCH enhancements for 52-71GHz spectrum. R1-2108771, 3GPP TSG RAN WG1 Meeting #106bis-e, e-Meeting. 02 October 2021.<br>See section 3.1.1. | 1-18 |
| A | LG ELECTRONICS. PDSCH/PUSCH enhancements to support NR above 52.6 GHz. R1-2112049, 3GPP TSG RAN WG1 #107-e, e-Meeting. 06 November 2021.<br>See section 2. | 1-18 |
| A | US 2018-0098370 A1 (INTEL IP CORPORATION) 05 April 2018 (2018-04-05)<br>See paragraphs [0118]-[0119]; and claim 27. | 1-18 |
| A | US 2021-0306065 A1 (QUALCOMM INCORPORATED) 30 September 2021 (2021-09-30)<br>See paragraphs [0110]-[0147]; and claim 1. | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 July 2023** | **14 July 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/004820**

| Patent document cited in search report | Publication date (day/month/year) | Patent family member(s) | Publication date (day/month/year) |
|---|---|---|---|
| US 2021-0297144 A1 | 23 September 2021 | US 11515930 B2 | 29 November 2022 |
| US 2018-0098370 A1 | 05 April 2018 | CN 107637162 A | 26 January 2018 |
| | | CN 107637162 B | 10 May 2022 |
| | | CN 114900791 A | 12 August 2022 |
| | | EP 3295757 A1 | 21 March 2018 |
| | | EP 3295757 B1 | 27 April 2022 |
| | | HK 1249332 A1 | 26 October 2018 |
| | | US 10904933 B2 | 26 January 2021 |
| | | US 11259346 B2 | 22 February 2022 |
| | | US 2019-0380159 A1 | 12 December 2019 |
| | | WO 2016-182597 A1 | 17 November 2016 |
| US 2021-0306065 A1 | 30 September 2021 | CN 115298966 A | 04 November 2022 |
| | | EP 4128556 A1 | 08 February 2023 |
| | | US 11563482 B2 | 24 January 2023 |
| | | WO 2021-194704 A1 | 30 September 2021 |

Form PCT/ISA/210 (patent family annex) (July 2022)